# EUROPÄISCHE PATENTSCHRIFT

(11) **EP 3 387 390 B1**
(45) Veröffentlichungstag und Bekanntmachung des Hinweises auf die Patenterteilung: **16.09.2020**
(21) Anmeldenummer: 16794588.0
(22) Anmeldetag: 09.11.2016
(51) Int. Cl.: G01D 11/24

(54) **ANSCHLUSSVORRICHTUNG ZUM MECHANISCHEN VERBINDEN EINES ELEKTRONIK-GEHÄUSES UND EINES MESSWANDLER-GEHÄUSES, MESSWANDLER MIT EINER SOLCHEN ANSCHLUSSVORRICHTUNG BZW. DAMIT GEBILDETES FELDGERÄT**
CONNECTION DEVICE FOR MECHANICALLY CONNECTING AN ELECTRONICS HOUSING AND A TRANSDUCER HOUSING, TRANSDUCER HAVING A CONNECTION DEVICE OF THIS TYPE OR FIELD DEVICE FORMED WITH SAME
DISPOSITIF DE BRANCHEMENT POUR LA LIAISON MÉCANIQUE D'UN BOÎTIER D'ÉLECTRONIQUE ET D'UN BOÎTIER DE CONVERTISSEUR DE MESURE, CONVERTISSEUR DE MESURE DOTÉ D'UN TEL DISPOSITIF DE BRANCHEMENT OU APPAREIL DE TERRAIN FORMÉ AVEC UN TEL DISPOSITIF DE BRANCHEMENT

(30) Priorität: 09.12.2015 DE 102015121462
(43) Veröffentlichungstag der Anmeldung: 17.10.2018
(73) Patentinhaber: Endress+Hauser Flowtec AG, 4153 Reinach (CH)
(72) Erfinder: BITTO, Ennio, 4147 Aesch (CH); GUNZENHAUSER, Andreas, 4450 Sissach (CH)
(74) Vertreter: Andres, Angelika Maria
(86) Internationale Anmeldenummer: PCT/EP2016/077053
(87) Internationale Veröffentlichungsnummer: WO 2017/097526

(56) Entgegenhaltungen:
- WO-A1-2009/155407
- WO-A1-2013/028200
- WO-A1-2016/096299
- DE-A1-102014 119 260
- US-A- 4 574 328
- US-A- 5 796 011

## Beschreibung

Die Erfindung betrifft eine Anschlußvorrichtung für ein Elektronik-Gehäuse, nämlich ein Schutzgehäuse für eine Elektronik, wie z.B. eine Umformer-Elektronik eines Meßgeräts der industriellen Meß- und Automatisierungstechnik. Darüberhinaus betrifft die Erfindung einen eine solche Anschlußvorrichtung aufweisenden Meßwandler sowie eine Feldgerät mit einem solchen Meßwandler.

In der industriellen Prozeß-Meßtechnik werden, insb. auch im Zusammenhang mit der Automation chemischer oder verfahrenstechnischer Prozesse und/oder der automatisierten Steuerung von industriellen Anlagen, prozeßnah installierte elektrische Meß- und/oder Schaltgeräte, so genannte Feldgeräte, wie z.B. Coriolis-Massendurchfluß-Meßgeräte, Dichte-Meßgeräte, magnetisch-induktive Durchflußmeßgeräte, Wirbel-Durchflußmeßgeräte, Ultraschall-Durchflußmeßgeräte, thermische Massendurchfluß-Meßgeräte, Druck-Meßgeräte, Füllstand-Meßgeräte, Temperatur-Meßgeräte, ph-Wert-Meßgeräte etc., eingesetzt, die der Erzeugung von Prozeßgrößen - analog oder digital - repräsentierenden Meßwerten sowie diese letztlich tragende Meßwertsignalen dienen. Bei den jeweils zu erfassenden Prozeßgrößen kann es sich je nach Anwendung beispielsweise, um einen Massendurchfluß, eine Dichte, eine Viskosität, einen Füll- oder einen Grenzstand, einen Druck oder eine Temperatur oder dergleichen, eines flüssigen, pulver-, dampf- oder gasförmigen Meßstoffs handeln, das in einem entsprechenden Behälter, wie z.B. einer Rohrleitung oder einem Tank, geführt bzw. vorgehalten wird.

Zum Erfassen der jeweiligen Prozeßgrößen weisen solche Feldgeräte jeweils einen entsprechenden physikalisch-elektrischen oder chemisch-elektrischen Meßwandler auf. Dieser ist zumeist in eine Wandung des den Meßstoff jeweils führenden Behälters oder der in den Verlauf einer der Meßstoff jeweils führenden Leitung, beispielsweise eine Rohrleitung, eingesetzt und dient dazu, wenigstens ein mit der zu erfassenden Prozeßgröße entsprechend korrespondierendes elektrisches Meßsignal zu erzeugen. Zum Verarbeiten des Meßsignals ist der Meßwandler weiters mit einer in einer Umformer-Elektronik des Feldgeräts vorgesehenen, der Weiterverarbeitung oder Auswertung des wenigstens einen Meßsignals wie auch der Generierung entsprechender Meßwertesignale dienenden Meßgerät internen Betriebs- und Auswerteschaltung verbunden. Weiterführende Beispiele für derartige, dem Fachmann an und für sich bekannte Feldgeräte, insb. auch deren Verwendung und deren Betrieb betreffende Einzelheiten, sind u.a. in der DE-A 37 11 754, der EP-A 984 248, der US-A 2004/0183550, der US-A 2006/0161359, der US-A 20070279173, der US-A 2009/0277278, der US-A 2011/0317390, der US-A 2014/0000374, der US-A 45 74 328, der US-A 47 16 770, der US-A 48 50 213, der US-A 52 07 101, der US-A 57 96 011, der US-B 62 36 322, der US-B 63 52 000, der US-B 63 66 436, der US-B 65 39 819, der US-B 65 56 447, der US-B 66 62 120, der WO-A 00/36 379, der WO-A 02/103327, der WO-A 2009/078918, der WO-A 2013/087390, der WO-A 2014/037258 oder der WO-A 98/14763 ausführlich und detailliert beschrieben.

Bei einer Vielzahl von Feldgeräten der in Rede stehenden Art wird der Meßwandler zum Erzeugen des Meßsignals im Betrieb zudem von einem von der Betriebs- und Auswerteschaltung zumindest zeitweise generierten Treibersignal so angesteuert, daß er in einer für die Messung geeigneten Weise zumindest mittelbar oder aber auch über eine den Meßstoff direkt kontaktierende Sonde praktisch unmittelbar auf den Meßstoff einwirkt, um dort mit der zu erfassenden Meßgröße entsprechend korrespondierende Reaktionen hervorzurufen. Das Treibersignal kann dabei beispielsweise hinsichtlich einer Stromstärke, einer Spannungshöhe und/oder einer Frequenz entsprechend geregelt sein. Als Beispiele für solche aktiven, also ein elektrisches Treibersignal im Meßstoff entsprechend umsetzende Meßwandler sind im besonderen dem Messen von zumindest zeitweise strömenden Medien dienende Durchfluß-Meßwandler, z.B. mit wenigstens einer vom Treibersignal angesteuerten, Magnetfeld erzeugenden Spule oder wenigstens einem vom Treibersignal angesteuerten Ultraschallsender, oder aber auch dem Messen und/oder Überwachen von Füllständen in einem Behälter dienende Füllstands- und/oder Grenzstandsaufnehmer, wie z.B. mit freistrahlender Mikrowellenantenne, Gouboun-Leitung oder vibrierendem Tauchkörper, zu nennen.

Die jeweilige Umformer-Elektronik ist zumeist dafür vorgesehen, über entsprechende elektrische Leitungen an ein vom jeweiligen Gerät zumeist räumlich entfernt angeordnetes und zumeist auch räumlich verteiltes übergeordneten elektronischen Datenverarbeitungssystem elektrisch angeschlossen zu werden sowie Meßwerte mittels eines diese entsprechend tragenden Meßwertesignals zeitnah bzw. in Echtzeit dorthin weiter geben zu können. Zudem sind solche Geräte im Betrieb üblicherweise mittels eines innerhalb des übergeordneten Datenverarbeitungssystems vorgesehenen Datenübertragungsnetzwerks miteinander und/oder mit entsprechenden elektronischen Prozeß-Steuerungen verbunden, beispielsweise vor Ort installierte Speicherprogrammierbare Steuerungen oder in einer entfernten Leitwarte installierte Prozeß-Leitrechnern, wohin die mittels des Geräts gegebenenfalls erzeugten und in geeigneter Weise digitalisierten und entsprechend codierten Meßwerte weitergesendet werden. Mittels solcher Prozeß-Leitrechner können die übertragenen Meßwerte weiterverarbeitet und als entsprechende Meßergebnisse z.B. auf Monitoren visualisiert und/oder in Steuersignale für andere als Stellgeräte ausgebildete Feldgeräte, wie z.B. Magnet-Ventile, Elektro-Motoren etc., umgewandelt werden. Da moderne Feldgeräte zumeist auch direkt von solchen Leitrechnern aus überwacht und gegebenenfalls gesteuert und/oder konfiguriert werden können, können über vorgenannte, zumeist hinsichtlich der Übertragungsphysik und/oder der Übertragungslogik hybride Datenübertragungsnetzwerke üblicherweise auch dem jeweiligen Feldgerät zugewiesene Betriebsdaten an dieses versendet werden. Zur Datenübertragung dienen in solchen industriellen Datenverarbeitungssystemen zumindest abschnittsweise, insb. serielle, Feldbusse, wie z.B. FOUNDATION FIELDBUS, Modbus, RACKBUS-RS 485, PROFIBUS etc., oder beispielsweise auch Netzwerke auf Basis des ETHERNET-Standards sowie die entsprechenden, zumeist übergreifend standardisierten Übertragungs-Protokolle. Neben den für die Verarbeitung und Konvertierung der von den jeweils angeschlossenen Feldgerät gelieferten Meßwerte erforderlichen Auswerteschaltungen weisen solche übergeordnete Datenverarbeitungssysteme zumeist auch der Versorgung der angeschlossenen Meß- und/oder Schaltgräte mit elektrischer Energie dienende elektrische Versorgungsschaltungen auf, die eine entsprechende, ggf. direkt vom angeschlossenen Feldbus gespeiste, Versorgungsspannung für die jeweilige Umformer-Elektronik bereitstellen und die daran angeschlossenen elektrische Leitungen sowie die jeweiligen Umformer-Elektroniken durchfließende elektrische Ströme treiben. Eine Versorgungsschaltung kann dabei beispielsweise genau einem Feldgerät jeweils zugeordnet und zusammen mit der dem jeweiligen Feldgerät zugeordneten Auswerteschaltung - beispielsweise zu einem entsprechenden Feldbusadapter vereint - in einem gemeinsamen, z.B. als Hutschienen-Modul ausgebildeten, Elektronik-Gehäuse untergebracht sein.

Bei Feldgeräten der in Rede stehenden Art ist die jeweilige Umformer-Elektronik zumeist in einem vergleichsweise robusten, etwa schlag-, druck-, explosions- und/oder wetterfesten, Elektronik-Gehäuse untergebracht. Beispiele für solche Elektronik-Gehäuse sind u.a. auch in den eingangs erwähnten US-B 63 66 436 in der US-B 65 56 447 oder der WO-A 98/14763 gezeigt. Demnach können Elektronik-Gehäuse beispielsweise mittels eines eine oder mehrere Kavitäten aufweisenden, zumeist topfförmigen Gehäuse-Grundkörper mit einer dessen Kavität seitlich begrenzenden, zumeist abschnittsweise kreiszylindrischen Seitenwand, mit einem offenen Ende und mit einem die Kavität auf einer dem offenen Ende gegenüberliegenden und davon entfernten Seite begrenzenden, beispielsweise flachen oder nach außen gewölbten, ggf. auch wieder lösbaren, Rückwand sowie eines mit dem Gehäuse-Grundkörper an dessen offenem Ende, beispielsweise mittels Schraubverbindung, wieder lösbar verbundenen und diesen verschließenden Gehäuse-Deckel gebildet sein. Der zumeist auch ein integriertes Sichtfenster aufweisende Gehäuse-Deckel ist üblicherweise mit dem Gehäuse-Grundkörper verschraubt, beispielsweise nach Art eines Schraubverschlusses.

Das Elektronik-Gehäuse mit darin plazierter Umformer-Elektronik kann vom Meßwandler entfernt angeordnet und mit diesem lediglich über ein flexibles Anschlußkabel verbunden sein. Das Elektronik-Gehäuse, einschließlich darin plazierter Umformer-Elektronik, kann aber auch, wie z.B. in der US-A 57 96 011 oder der US-B 66 62 120 gezeigt, direkt am Meßwandler gehaltert sein, beispielsweise nämlich derart, daß das Elektronik-Gehäuse an einer Rohrwandung eines Meßstoff führenden Rohrs des Meßwandlers befestigt und/oder als ein Teilbereich nämlicher Rohrwandung ausgebildet ist, oder auch derart, daß das Elektronik-Gehäuse an einem Sensorelemente des Meßwandler separat einhausenden Meßwandler-Gehäuse angeordnet, nämlich an einer Wandung des Meßwandler-Gehäuses befestigt und/oder als ein Teilbereich nämlicher Wandung ausgebildet ist.

Üblicherweise dient hierbei eine - gelegentlich auch als Sensorhals bezeichnete - Anschlußvorrichtung als ein einen vorgegebenen Abstand zwischen Meßwandler und Umformer-Elektronik definierendes Bindeglied zwischen dem Elektronik-Gehäuse und dem Meßwandler bzw. dessen Meßwandler-Gehäuse. Eine in der US-A 57 96 011 oder der US-B 66 62 120 gezeigte derartige Anschlußvorrichtung weist beispielsweise jeweils einen in einem festen Abstand von der Wandung des Aufnehmer-Gehäuses positionierten Anschlußkopf sowie ein - beispielsweise kegelförmigen oder mittels eines Metallrohrs gebildeten, mithin zylindrischen - Anschlußstutzen zum mechanischen Verbinden von Elektronik-Gehäuse und Meßwandler-Gehäuse auf, wobei ein erstes Ende des Anschlußstutzen mit der Wandung des Meßwandler-Gehäuses und ein zweites Ende mit dem Anschlußkopf verbunden sind. Der, beispielsweise von einem Anschlußflansch gefaßte bzw. damit gebildete, Anschlußkopf wiederum ist dafür eingerichtet, mit einem Elektronik-Gehäuse (mit darin plazierter Umformer-Elektronik) mechanisch verbunden, beispielsweise nämlich verschraubt zu werden sowie in einem von einer, üblicherweise aus einem Metall, beispielsweise nämlich einem Stahl hergestellte Stutzenwand umgebenen Lumen vom Meßwandler zur Umformer-Elektronik verlegte elektrische Verbindungsleitungen zu führen. Das von der Stutzenwand umgebene Lumen kann gegen die das Meßwandler-Gehäuse umgebende Atmosphäre hermetisch abgeschlossen sein, etwa unter Verwendung einer am anschlußkopfseitigen zweiten Ende, gleichwohl innerhalb des Lumens plazierten, beispielsweise aus einem Glas oder einem Kunststoff hergestellten Durchführung für die Verbindungsleitungen; im übrigen ist nämliches Lumen typischerweise mit einem Gas, insb. nämlich Luft, gefüllt.

Aus dem mittels der Anschlußvorrichtung letztendlich eingestellten, nämlich aus einer Länge des Anschlußstutzen resultierenden Abstand, einer Wanddicke der Stutzenwand sowie einer durch nämliche Länge wie auch einen Innendurchmesser des Anschlußstutzen bestimmte Größe des von der Stutzenwand umgebenen Lumens ergibt sich u.a. auch ein einem vom Meßwandler zum Elektronik-Gehäuse insgesamt transferierten Wärmestrom entgegenwirkender, sowohl auf Wärmeleitung als auch auf Konvektion des im Lumen vorgehaltenen Gases basierender thermischer Widerstand der Anschlußvorrichtung bzw. ergibt sich entsprechend ein zwischen Meßwandler und Umformer-Elektronik stationär aufrecht zu haltender Temperaturgradient. Die jeweilige Auslegung vorbezeichneter Parameter - Länge des Anschlußstutzens, Wanddicke der Stutzenwand sowie im Anschlußstutzen eingeschlossenes Gasvolumen - limitiert insoweit auch eine zulässige Temperatur, die der jeweilige Meßstoff maximal annehmen darf, ohne die Umformer-Elektronik infolge einer daraus resultierenden zu hohen Betriebstemperatur zu beschädigen bzw. hinsichtlich ihrer Funktionsweise nicht mehr kompensierbar zu beeinträchtigen. Für Umformer-Elektroniken maximal erträgliche Betriebstemperaturen liegen typischerweise etwa im Bereich zwischen 85°C und 115°C. Nachdem die Wanddicke der Stutzenwand wie auch ein Außendurchmesser des Anschlußstutzens - nicht zuletzt auch zwecks Schaffung einer mechanisch ausreichend stabilen und möglichst vibrationsunempfindlichen, ggf. zudem auch explosionsgeschützten Anschlußvorrichtung - zumeist vergleichsweise groß ausgelegt sind, liegt ein mit einer Anschlußeinrichtung der vorgenannten Art erreichbarer abstandspezifischer thermischer Widerstand, gemessen als ein Verhältnis des vorbezeichneten, dem vom Meßwandler zum Elektronik-Gehäuse insgesamt fließenden Wärmestrom entgegenwirkenden thermischen Widerstands der Anschlußvorrichtung zu einem kürzesten Abstand zwischen Elektronik-Gehäuse und Meßwandler bzw. dessen Meßwandler-Gehäuse, regelmäßig etwa in der Größenordnung von 80 K/100 mm - 110 K/100 mm. Infolgedessen können Anschlußvorrichtungen bzw. deren jeweiliger Anschlußstutzen gelegentlich, nicht zuletzt bei Verwendung in Hochtemperaturmeßstellen mit Meßstofftemperaturen von über 200°C, vergleichsweise beträchtliche Längen von deutlich mehr als 100 mm einhergehend mit einer entsprechend hohen, gleichwohl eigentlich unerwünschten seitlichen Ausdehnung des damit schlußendlich gebildeten Meßsystems aufweisen.

Ausgehend vom vorbezeichneten Stand der Technik besteht eine Aufgabe der Erfindung darin, eine möglichst einfach aufgebaute bzw. kostengünstig herstellbare Anschlußvorrichtung mit einem im Vergleich zu herkömmlichen Anschlußvorrichtungen vergrößerten abstandspezifischen thermischen Widerstand anzugeben.

Zur Lösung der Aufgabe besteht die Erfindung in einer Anschlußvorrichtung zum mechanischen Verbinden eines Elektronik-Gehäuses, nämlich eines Schutzgehäuses für eine Elektronik, beispielsweise eine Umformer-Elektronik, und eines Meßwandler-Gehäuses, nämlich eines Schutzgehäuses für wenigstens ein, beispielsweise physikalisch-zu-elektrisches, Sensorelement, welche Anschlußvorrichtung umfaßt: einen röhrenförmigen Kabelschacht mit in einem von einer Schachtwand umgebenen, sich von einem ersten Schachtende bis zu einem davon entfernten zweiten Schachtende erstreckenden Lumen zum Führen von elektrischen Verbindungsleitungen sowie einen, beispielsweise rohrförmigen, Anschlußstutzen mit einem von einer, beispielsweise metallischen, Stutzenwand umhüllten Lumen. Die Stutzenwand bzw. der damit gebildete Anschlußstutzen weist eine erste Öffnung und eine davon entfernte zweite Öffnung auf. Desweiteren sind der Kabelschacht und der Anschlußstutzen so angeordnet, daß der Kabelschacht anteilig im Lumen des Anschlußstutzens plaziert und anteilig sowohl von der ersten Öffnung der Stutzenwand des Anschlußstutzens als auch von der zweiten Öffnung der Stutzenwand des Anschlußstutzens aufgenommen ist, und daß zwischen einer dem Lumen zugewandte Innenfläche der Stutzenwand und einer dem Lumen zugewandten Mantelfläche der Schachtwand eine, beispielsweise einzige, Kavität gebildet ist. Darüberhinaus sind der Kabelschacht und der Anschlußstutzen so miteinander verbunden, daß die Kavität gasdicht geschlossen ist, beispielsweise derart, daß die Kavität gegen eine den Anschlußstutzen bzw. die Anschlußvorrichtung umgebende Atmosphäre hermetisch abgeschlossen ist.

Desweiteren besteht die Erfindung in einem mittels einer solchen Anschlußvorrichtung gebildeten Meßwandler, wobei der Meßwandler weiters ein Meßwandler-Gehäuse mit einer von einer, beispielsweise metallischen, Wandung umhüllten Kavität sowie ein zumindest teilweise innerhalb nämlicher Kavität positioniertes Sensorelement, das dafür eingerichtet ist, eine Meßgröße eines, beispielsweise fluiden, Meßstoffs zu erfassen und wenigstens ein nämliche Meßgröße repräsentierendes Meßsignal zu generieren, umfaßt, und wobei die Anschlußvorrichtung am Meßwandler-Gehäuse fixiert, beispielsweise nämlich mit dessen Wandung stoffschlüssig verbunden, ist.

Ferner besteht die Erfindung auch in einem mittels eines solchen Meßwandler gebildeten Feldgeräts, wobei das Feldgerät weiters eine, beispielsweise mittels im Kabelschacht geführter elektrischer Verbindungsleitungen, mit nämlichem Meßwandler - beispielsweise nämlich einem zumindest teilweise innerhalb der Kavität des Meßwandler-Gehäuses positionierten Sensorelement des Meßwandlers und/oder einem innerhalb der Kavität des Meßwandler-Gehäuses positionierten Schwingungserreger des Meßwandlers - elektrisch verbundene Umformer-Elektronik umfaßt.

Nach einer ersten Ausgestaltung der Anschlußvorrichtung der Erfindung ist ferner vorgesehen, daß der Anschlußstutzen und der Kabelschacht dafür eingerichtet sind, in der Kavität ein, beispielsweise mit einem Gasdruck von 1 bar auf die Stutzen- und die Schachtwand wirkendes, Gas, beispielsweise Stickstoff (N₂), Argon (Ar), Kohlendioxid (CO₂), zu halten.

Nach einer zweiten Ausgestaltung der Anschlußvorrichtung der Erfindung ist ferner vorgesehen, daß die Kavität ein, beispielsweise eine spezifische Wärmeleitfähigkeit von weniger als 0,1 W / (m · K) aufweisendes und/oder gasförmiges, Fluid, beispielsweise Stickstoff (N₂), Argon (Ar), Kohlendioxid (CO₂), enthält. Diese Ausgestaltung der Erfindung weiterbildend ist ferner vorgesehen, daß die Kavität mit einem, beispielsweise eine spezifische Wärmeleitfähigkeit von weniger als 0,1 W / (m · K) aufweisenden, Gas bzw. Gasgemisch, beispielsweise nämlich einem Edelgas und/oder einem Schutzgas, befüllt ist, insb. derart, daß ein in der Kavität (33) herrschender Gasdruck bei 25 °C (Raumtemperatur) weniger als 300 mbar (Millibar) oder mehr als 0,5 bar beträgt. Nach einer dritten Ausgestaltung der Anschlußvorrichtung der Erfindung ist ferner vorgesehen, daß die Kavität zumindest soweit evakuiert/gasfrei ist, daß ein darin herrschender Gasdruck bei 25 °C (Raumtemperatur) weniger als 300 mbar (Millibar), beispielsweise weniger als 1 mbar, beträgt. Diese Ausgestaltung der Erfindung weiterbildend ist ferner vorgesehen, daß der Gasdruck bei 25 °C (Raumtemperatur) weniger als 10⁻³ mbar, beispielsweise nämlich weniger als 10⁻⁴ mbar, beträgt.

Nach einer vierten Ausgestaltung der Anschlußvorrichtung der Erfindung ist ferner vorgesehen, daß der Kabelschacht eingerichtet ist, einem statischen Druck von mehr als 100 bar zerstörungsfrei standzuhalten.

Nach einer fünften Ausgestaltung der Anschlußvorrichtung der Erfindung ist ferner vorgesehen, daß die Schachtwand des Kabelschachts einen Berstdruck von mehr als 300 bar aufweist.

Nach einer sechsten Ausgestaltung der Anschlußvorrichtung der Erfindung ist ferner vorgesehen, daß mittels des Kabelschachts eine, beispielsweise den Erfordernissen der Norm IEC 60079-1:2007 genügende bzw. gemäß der Zündschutzart "Druckfeste Kapselung (Ex-d)" ausgebildete und/oder eine Druckfestigkeit von mehr als 100 bar aufweisende, druckfeste Kapselung für darin geführte Verbindungsleitungen gebildet ist.

Nach einer siebenten Ausgestaltung der Anschlußvorrichtung der Erfindung ist ferner vorgesehen, daß der Anschlußstutzen mittels eines Metallrohrs gebildet ist.

Nach einer achten Ausgestaltung der Anschlußvorrichtung der Erfindung ist ferner vorgesehen, daß die Stutzenwand zumindest bereichsweise hohlzylindrisch ist.

Nach einer neunten Ausgestaltung der Anschlußvorrichtung der Erfindung ist ferner vorgesehen, daß die Kavität als Ringspalt ausgebildet ist.

Nach einer zehnten Ausgestaltung der Anschlußvorrichtung der Erfindung ist ferner vorgesehen, daß Kabelschacht und Anschlußstutzen miteinander stoffschlüssig verbunden sind.

Nach einer elften Ausgestaltung der Anschlußvorrichtung der Erfindung ist ferner vorgesehen, daß Kabelschacht und Anschlußstutzen miteinander adhäsiv verbunden sind.

Nach einer zwölften Ausgestaltung der Anschlußvorrichtung der Erfindung ist ferner vorgesehen, daß die Kavität zumindest luftdicht geschlossen ist.

Nach einer dreizehnten Ausgestaltung der Anschlußvorrichtung der Erfindung ist ferner vorgesehen, daß die Stutzenwand aus Metall, beispielsweise nämlich einem Edelstahl, besteht.

Nach einer vierzehnten Ausgestaltung der Anschlußvorrichtung der Erfindung ist ferner vorgesehen, daß die Schachtwand aus Metall, beispielsweise nämlich einem Edelstahl oder Titan, besteht.

Nach einer fünfzehnten Ausgestaltung der Anschlußvorrichtung der Erfindung ist ferner vorgesehen, daß die Stutzenwand und Schachtwand aus gleichem Material bestehen.

Nach einer sechzehnten Ausgestaltung der Anschlußvorrichtung der Erfindung ist ferner vorgesehen, daß der Kabelschacht mittels eines Metallrohrs gebildet ist.

Nach einer siebzehnten Ausgestaltung der Anschlußvorrichtung der Erfindung ist ferner vorgesehen, daß der Kabelschacht mittels eines Metallschlauchs, beispielsweise nämlich mittels eines Wellenschlauchs, gebildet ist.

Nach einer achtzehnten Ausgestaltung der Anschlußvorrichtung der Erfindung ist ferner vorgesehen, daß die Stutzenwand einen Berstdruck von mehr als 300 bar aufweist.

Nach einer neunzehnten Ausgestaltung der Anschlußvorrichtung der Erfindung ist ferner vorgesehen, daß der Anschlußstutzen auf einer dem Lumen abgewandten Außenfläche der Stutzenwand, beispielsweise nämlich als integraler Bestandteil der Stutzenwand ausgebildete, Kühlrippen aufweist.

Nach einer zwanzigsten Ausgestaltung der Anschlußvorrichtung der Erfindung ist ferner vorgesehen, daß die Stutzenwand eine, beispielsweise kleinste, Dicke aufweist, die größer als 1 mm, beispielsweise größer als 2 mm ist.

Nach einer einundzwanzigsten Ausgestaltung der Anschlußvorrichtung der Erfindung ist ferner vorgesehen, daß die Schachtwand eine, beispielsweise kleinste, Dicke aufweist, die größer als 0,5 mm, beispielsweise größer als 1 mm ist.

Nach einer zweiundzwanzigsten Ausgestaltung der Anschlußvorrichtung der Erfindung ist ferner vorgesehen, daß die Schachtwand eine, beispielsweise kleinste, Dicke aufweist, die größer ist als eine, beispielsweise kleinste, Dicke der Stutzenwand ist.

Nach einer dreiundzwanzigsten Ausgestaltung der Anschlußvorrichtung der Erfindung ist ferner vorgesehen, daß Kabelschacht und Anschlußstutzen gleichlang sind.

Nach einer vierundzwanzigsten Ausgestaltung der Anschlußvorrichtung der Erfindung ist ferner vorgesehen, daß Kabelschacht und Anschlußstutzen zueinander koaxial verlaufend angeordnet sind.

Nach einer fünfundzwanzigsten Ausgestaltung der Anschlußvorrichtung der Erfindung ist ferner vorgesehen, daß der Anschlußstutzen eine Länge aufweist, die mehr als 50 mm beträgt, und/oder die wesentlich, beispielsweise nämlich im Verhältnis von mehr als 2:1, größer als ein Außendurchmesser des Anschlußstutzens ist.

Nach einer sechsundzwanzigsten Ausgestaltung der Anschlußvorrichtung der Erfindung ist ferner vorgesehen, daß der Anschlußstutzen einen Außendurchmesser aufweist, der mehr als 20 mm beträgt.

Nach einer siebenundzwanzigsten Ausgestaltung der Anschlußvorrichtung der Erfindung ist ferner vorgesehen, daß der Kabelschacht eine Länge aufweist, die mehr als 50 mm beträgt, und/oder die wesentlich, beispielsweise nämlich im Verhältnis von mehr als 2:1, größer als ein Außendurchmesser des Kabelschachts ist.

Nach einer achtundzwanzigsten Ausgestaltung der Anschlußvorrichtung der Erfindung ist ferner vorgesehen, daß der Kabelschacht einen Außendurchmesser aufweist, der weniger als 10 mm beträgt, und/oder der wesentlich, beispielsweise nämlich im Verhältnis von weniger als 1:2, kleiner als ein Außendurchmesser des Anschlußstutzens ist.

Nach einer neunundzwanzigsten Ausgestaltung der Anschlußvorrichtung der Erfindung ist ferner vorgesehen, daß die Stutzenwand ein die erste Öffnung fassendes, beispielsweise membranartiges und/oder in Richtung einer gedachten Längsachse des Kabelschachts axial nachgiebiges, erstes endständiges Teilsegment aufweist.

Nach einer dreißigsten Ausgestaltung der Anschlußvorrichtung der Erfindung ist ferner vorgesehen, daß die Stutzenwand ein die erste Öffnung fassendes, beispielsweise membranartiges und/oder in Richtung einer gedachten Längsachse des Kabelschachts axial nachgiebiges, erstes endständiges Teilsegment aufweist und daß das erste endständige Teilsegment der Stutzenwand dafür eingerichtet ist, auf eine - beispielsweise aus einer zeitlich ändernden Temperaturdifferenz zwischen Stutzenwand und Schachtwand resultierende - Differenz zwischen einer zeitlich ändernden relativen Längenänderungen des Anschlußstutzens und einer zeitlich ändernden relativen Längenänderungen des Kabelschachts mit einer reversiblen Verformung zu reagieren

Nach einer einunddreißigsten Ausgestaltung der Anschlußvorrichtung der Erfindung ist ferner vorgesehen, daß die Stutzenwand ein die erste Öffnung fassendes, beispielsweise membranartiges und/oder in Richtung einer gedachten Längsachse des Kabelschachts axial nachgiebiges, erstes endständiges Teilsegment aufweist und daß das erste endständige Teilsegment der Stutzenwand zumindest anteilig mittels einer dünnen, nämlich eine im Vergleich zu einem Durchmesser wesentlich, beispielsweise nämlich im Verhältnis von weniger als 1:5, geringere Dicke aufweisenden Scheibe gebildet ist.

Nach einer zweiunddreißigsten Ausgestaltung der Anschlußvorrichtung der Erfindung ist ferner vorgesehen, daß die Stutzenwand ein die erste Öffnung fassendes, beispielsweise membranartiges und/oder in Richtung einer gedachten Längsachse des Kabelschachts axial nachgiebiges, erstes endständiges Teilsegment aufweist und daß das erste endständige Teilsegment der Stutzenwand eine axiale Nachgiebigkeit aufweist, die eine Differenz zwischen Längenänderungen des Anschlußstutzens und/oder des Kabelschachts von wenigstens 0,1 mm zerstörungsfrei ermöglicht.

Nach einer dreiunddreißigsten Ausgestaltung der Anschlußvorrichtung der Erfindung ist ferner vorgesehen, daß die Stutzenwand ein die erste Öffnung fassendes, beispielsweise membranartiges und/oder in Richtung einer gedachten Längsachse des Kabelschachts axial nachgiebiges, erstes endständiges Teilsegment aufweist und daß die Stutzenwand ein die zweite Öffnung fassendes, beispielsweise membranartiges und/oder in Richtung einer gedachten Längsachse des Kabelschachts axial nachgiebiges, zweites endständiges Teilsegment aufweist. Diese Ausgesatltung der Erfindug weiterbildend ist ferner vorgesehen, daß das zweite endständige Teilsegment der Stutzenwand dafür eingerichtet ist, auf eine - beispielsweise aus einer zeitlich ändernden Temperaturdifferenz zwischen Stutzenwand und Schachtwand resultierende - Differenz zwischen einer zeitlich ändernden relativen Längenänderungen des Anschlußstutzens und einer zeitlich ändernden relativen Längenänderungen des Kabelschachts mit einer reversiblen Verformung zu reagieren. Alternativ oder in Ergänzung kann das zweite endständige Teilsegment der Stutzenwand zumindest anteilig mittels einer dünnen, nämlich eine im Vergleich zu einem Durchmesser wesentlich, beispielsweise nämlich im Verhältnis von weniger als 1:5, geringere Dicke aufweisenden Scheibe gebildet sein und/oder kann das zweite endständige Teilsegment der Stutzenwand eine axiale Nachgiebigkeit aufweisen, die eine Differenz zwischen Längenänderungen des Anschlußstutzens und/oder des Kabelschachts von wenigstens 0,1 mm zerstörungsfrei ermöglicht.

Nach einer vierunddreißigsten Ausgestaltung der Anschlußvorrichtung der Erfindung ist ferner vorgesehen, daß ein - beispielsweise im seitlichen Abstand zum Kabelschacht verlaufendes und/oder koaxial zum Kabelschacht angeordnetes - mittleres Teilsegment der Stutzenwand eine, beispielsweise hohlzylindrische, Röhre bildet.

Nach einer ersten Weiterbildung der erfindungsgemäßen Anschlußvorrichtung umfaßt diese weiters: einen mit dem Anschlußstutzen verbundenen - beispielsweise holzylindrischen und/oder hülsenförmigen - Anschlußkopf mit einer sich von einem dem Anschlußstutzen und dem Kabelschacht zugewandten ersten Ende bis zu einem von Anschlußstutzen und Kabelschacht entfernten zweiten Ende erstreckende - beispielsweise metallische und/oder mit der Stutzenwand stoffschlüssig verbundene - Wandung sowie einem von nämlicher Wandung umhüllten Lumen, welcher Anschlußkopf dafür eingerichtet ist, mit einem Elektronik-Gehäuse, beispielsweise wieder lösbar, mechanisch verbunden zu werden.
Nach einer ersten Ausgestaltung der ersten Weiterbildung der erfindungsgemäßen Anschlußvorrichtung ist ferner vorgesehen, daß ein - beispielsweise im seitlichen Abstand zum Kabelschacht verlaufendes und/oder koaxial zum Kabelschacht angeordnetes - mittleres Teilsegment der Stutzenwand eine, beispielsweise hohlzylindrische, Röhre bildet und daß die Wandung des Anschlußkopfs am ersten Ende, beispielsweise gasdicht und/oder stoffschlüssig, mit der Stutzenwand - beispielsweise nämlich mit einem dem Anschlußkopf zugewandten Ende von deren mittleren Teilsegment - verbunden ist, beispielsweise derart, daß das Lumen des Kabelschachts mit dem Lumen des Anschlußkopfs kommuniziert bzw. in nämliches Lumen mündet.
Nach einer zweiten Ausgestaltung der ersten Weiterbildung der erfindungsgemäßen Anschlußvorrichtung ist ferner vorgesehen, daß Anschlußkopf, Anschlußstutzen und Kabelschacht so angeordnet sind, daß das Lumen des Kabelschachts mit dem Lumen des Anschlußkopfs kommuniziert.

Nach einer zweiten Weiterbildung der erfindungsgemäßen Anschlußvorrichtung umfaßt diese weiters: einen mit dem Anschlußstutzen verbundenen - beispielsweise holzylindrischen und/oder hülsenförmigen - Anschlußkopf mit einer sich von einem dem Anschlußstutzen und dem Kabelschacht zugewandten ersten Ende bis zu einem von Anschlußstutzen und Kabelschacht entfernten zweiten Ende erstreckende - beispielsweise metallische und/oder mit der Stutzenwand stoffschlüssig verbundene - Wandung sowie einem von nämlicher Wandung umhüllten Lumen, sowie eine dem Anschluß von im Kabelschacht geführten elektrischen Verbindungsleitungen dienliche, beispielsweise aus Glas, Keramik oder einem Kunststoff hergestellte, Durchführung,
Nach einer ersten Ausgestaltung der zweiten Weiterbildung der erfindungsgemäßen Anschlußvorrichtung ist ferner vorgesehen, daß der Anschlußkopf dafür eingerichtet ist, mit einem Elektronik-Gehäuse, beispielsweise wieder lösbar, mechanisch verbunden zu werden und daß die Durchführung innerhalb des Lumens des Anschlußkopfes plaziert und/oder von der Wandung des Anschlußkopfes gefaßt ist.
Nach einer zweiten Ausgestaltung der zweiten Weiterbildung der erfindungsgemäßen Anschlußvorrichtung ist ferner vorgesehen, daß die Wandung des Anschlußkopfes zumindest im Bereich des zweiten Endes ein Außengewinde aufweist, beispielsweise nämlich ein Außengewinde, das dafür eingerichtet ist, mit einem komplementären Innengewinde eines Elektronik-Gehäuses verschraubt zu werden.
Nach einer dritten Ausgestaltung der zweiten Weiterbildung der erfindungsgemäßen Anschlußvorrichtung ist ferner vorgesehen, daß der Anschlußkopf einen Verbindungsflansch aufweist, der dafür eingerichtet ist, mit einem komplementären Verbindungsflansch eines Elektronik-Gehäuses, beispielsweise wieder lösbar, verbunden zu werden.

Nach einer ersten Ausgestaltung des Meßwandlers der Erfindung ist ferner vorgesehen, daß die Anschlußvorrichtung zumindest teilweise, beispielsweise überwiegend, außerhalb der von der Wandung umhüllten Kavität plaziert ist.

Nach einer zweiten Ausgestaltung des Meßwandlers der Erfindung ist ferner vorgesehen, daß das Meßwandler-Gehäuse dafür eingerichtet ist, in der Kavität ein, beispielsweise mit einem Gasdruck von 1 bar auf die Stutzen- und die Wandung wirkendes und/oder eine spezifische Wärmeleitfähigkeit von weniger als 0,1 W / (m · K) aufweisendes, Gas, beispielsweise Stickstoff (N₂) und/oder Argon (Ar) und/oder Kohlendioxid (CO₂) bzw. Luft, zu halten. Diese Ausgestaltung der Erfindung weiterbildend ist ferner vorgesehen, daß die Kavität des Meßwandler-Gehäuses mit einem, beispielsweise eine spezifische Wärmeleitfähigkeit von weniger als 0,1 W / (m · K) aufweisenden, Gas bzw. Gasgemisch, beispielsweise einem Schutzgas, befüllt ist, beispielsweise derart, daß ein in der Kavität herrschender Gasdruck bei 25 °C (Raumtemperatur) mehr als 0,5 bar, beträgt.

Nach einer dritten Ausgestaltung des Meßwandlers der Erfindung ist ferner vorgesehen, daß ein - beispielsweise im seitlichen Abstand zum Kabelschacht verlaufendes und/oder zum Kabelschacht angeordnetes - mittleres Teilsegment der Stutzenwand eine, beispielsweise hohlzylindrische, Röhre bildet, und daß die Stutzenwand mit einem dem Meßwandler-Gehäuse zugewandten Ende von deren mittleren Teilsegment, beispielsweise stoffschlüssig, mit der Wandung des Meßwandler-Gehäuse verbunden, beispielsweise nämlich verlötet oder verschweißt, ist.

Nach einer ersten Weiterbildung des erfindungsgemäßen Meßwandlers umfaßt dieser weiters: wenigstens ein zumindest teilweise innerhalb der Kavität des Meßwandler-Gehäuses angeordnetes Rohr, das dafür eingerichtet ist, in einem von einer, beispielsweise metallischen, Rohrwandung umgebenen Lumen ein strömendes Fluid, beispielsweise eine strömende Flüssigkeit, zu führen, beispielsweise nämlich vibrieren gelassen zu werden, während es von Fluid durchströmt ist. Das wenigstens eine, beispielsweise dem Erzeugen eines Vibrationen des wenigstens einen Rohrs repräsentierenden Meßsignals dienliche, Sensorelement kann zudem am wenigstens eine Rohr bzw. in dessen Nähe angeordnet sein, beispielsweise derart, daß nämliches Sensorelement mit der Rohrwandung des Rohrs verbunden ist.

Nach einer zweiten Weiterbildung des erfindungsgemäßen Meßwandlers umfaßt dieser weiters: wenigstens einen innerhalb der Kavität des Meßwandler-Gehäuses positionierten Schwingungserreger, der dafür eingerichtet ist, das wenigstens eine Rohr zu mechanischen Schwingungen anzuregen.

Nach einer dritten Weiterbildung des erfindungsgemäßen Meßwandlers umfaßt dieser weiters: ein Elektronik-Gehäuse, nämlich ein Schutzgehäuse für die Umformer-Elektronik, wobei die, beispielsweise mittels im Kabelschacht geführter elektrischer Verbindungsleitungen mit dem Meßwandler elektrisch verbundene, Umformer-Elektronik innerhalb des Elektronik-Gehäuses plaziert ist, und wobei das Elektronik-Gehäuse, beispielsweise wiederlösbar, mit der Anschlußvorrichtung mechanisch verbunden ist.

Die Erfindung sowie vorteilhafte Ausgestaltungen davon werden nachfolgend anhand von Ausführungsbeispielen näher erläutert, die in den Figuren der Zeichnung dargestellt sind. Gleiche bzw. gleichwirkende oder gleichartig fungierende Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet. Weitere vorteilhafte Ausgestaltungen oder Weiterbildungen, insb. auch Kombinationen zunächst nur einzeln erläuterter Teilaspekte der Erfindung, ergeben sich ferner aus den Figuren der Zeichnung und/oder aus den Ansprüchen an sich.

Im einzelnen zeigen:
- Fig. 1: in einer perspektivischen Seitenansicht ein Feldgerät mit einem mittels einer Anschlußvorrichtung an einem Meßwandler gehalterten Elektronik-Gehäuse;
- Fig. 2a, 2b: in verschiedenen, teilweise geschnittenen ebenen Seitenansichten ein Feldgerät gemäß Fig. 1;
- Fig. 3: in geschnittener Seitenansicht eine für ein Feldgerät gemäß Fig. 1 geeignete Anschlußvorrichtung; und
- Fig. 4, 5: jeweils in geschnittener Seitenansicht weitere Varianten einer für ein Feldgerät gemäß Fig. 1 geeigneten Anschlußvorrichtung.

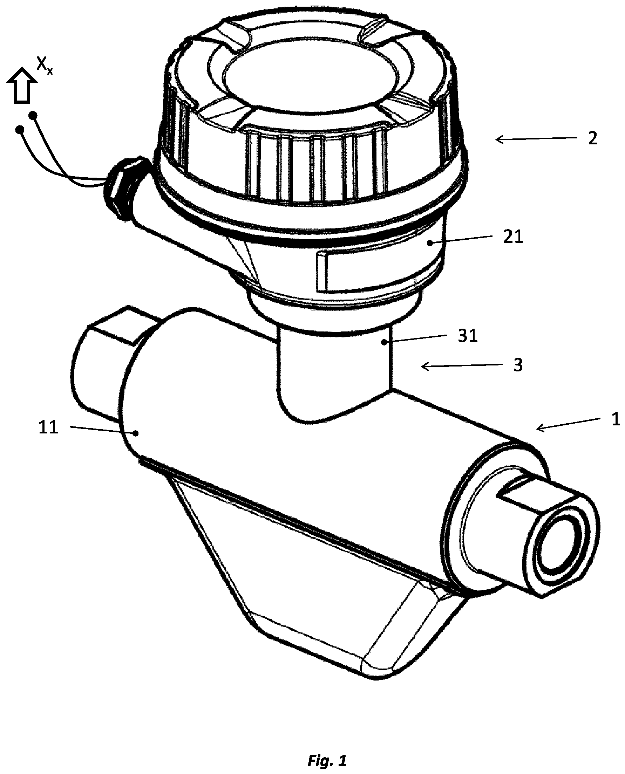

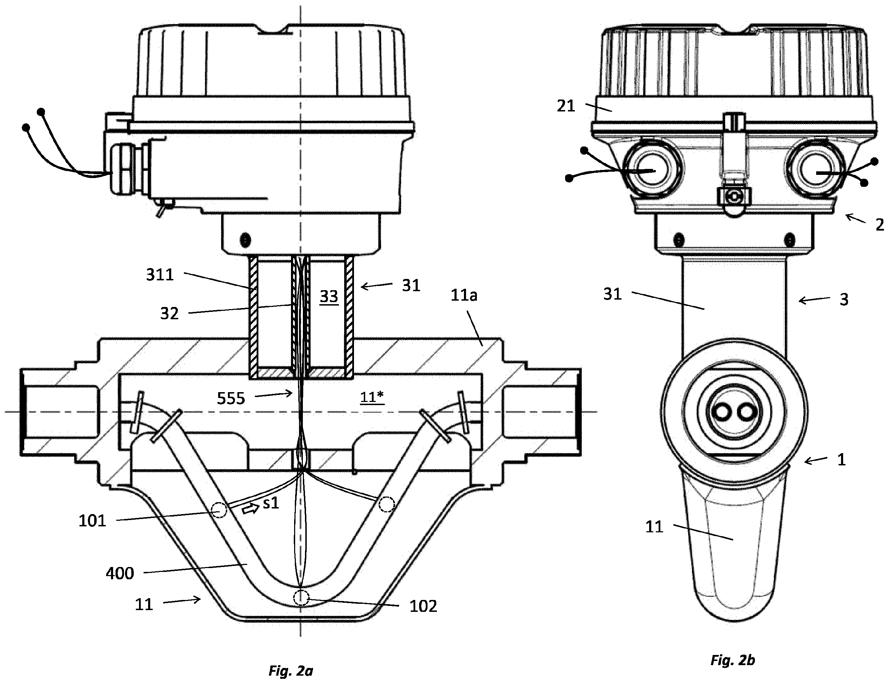

In der Fig. 1, 2a und 2b sind ein Feldgerät, nämlich ein für die industrielle Meß- und Automatisierungstechnik geeignetes Meßgerät bzw. einzelne Baugruppen nämlichen Feldgeräts dargestellt. Das Feldgerät ist im besonderen dafür vorgesehen bzw. eingerichtet, zum Messen wenigstens einer physikalischen und/oder chemischen Meßgröße eines in einer, beispielsweise sich zumindest abschnittsweise durch eine explosionsgefährdete Gefahrenzone erstreckenden, Rohrleitung und/oder in einem, beispielsweise innerhalb einer explosionsgefährdeten Gefahrenzone plazierten, Behälter geführten, insb. fluiden, Meßstoffs verwendet zu werden. Bei dem Feldgerät kann es sich beispielsweise auch um ein magnetisch-induktives Durchflußmeßgerät, ein Wirbel-Durchflußmeßgerät, ein Ultraschall-Durchflußmeßgerät, ein thermisches Massendurchfluß-Meßgerät, ein Druck-Meßgerät, ein Füllstand-Meßgerät, ein Temperatur-Meßgerät, ein ph-Wert-Meßgerät, oder ein Leitfähigkeit-Meßgerät oder, wie auch aus Fig. 2a bzw. einer Zusammenschau der Fig. 1, 2a und 2b ersichtlich, beispielsweise um ein Coriolis-Massendurchfluß-Meßgerät handeln.

Zum Erfassen der wenigstens eine Meßgröße umfaßt das Feldgerät einen Meßwandler 1 mit wenigstens einem Sensorelement 101, das dafür eingerichtet ist, im Betrieb zumindest zeitweise wenigstens ein mit der wenigstens einen Meßgröße des jeweils zu messenden Meßstoffs korrespondierendes elektrisches Meßsignal - beispielsweise mit einer von der Meßgröße abhängigen Spannung, einem von der Meßgröße abhängigen Strom bzw. einer von der Meßgröße abhängigen Frequenz und/oder Phase - zu generieren bzw. via elektrische Verbindungsleitungen bereitzustellen.

Zwecks einer geschützten Unterbringung von einzelnen Komponenten bzw. Baugruppen des Meßwandlers, nicht zuletzt auch des wenigstens einen Sensorelements 101, umfaßt der Meßwandler ferner ein entsprechendes Meßwandler-Gehäuse 11. Nämliches Meßwandler-Gehäuse 11 kann, wie auch in Fig. 2a angedeutet, eine - beispielsweise aus einem Metall hergestellte - Wandung 11a sowie eine von nämlicher Wandung 11a umhüllte Kavität 11* aufweisen, die dafür eingerichtet ist, zumindest das wenigstens eine Sensorelement 101 aufzunehmen. Nach einer weiteren Ausgestaltung der Erfindung ist die Kavität 11* des Meßwandler-Gehäuses gegen eine nämliches Meßwandler-Gehäuse (bzw. das damit gebildete Feldgerät) umgebende Atmosphäre hermetisch abgeschlossen bzw. ist das Meßwandler-Gehäuses 11 dafür eingerichtet, in dessen Kavität 11* ein, beispielsweise mit einem Gasdruck von 1 bar auf die Wandung 11a wirkendes, Gas, beispielsweise nämlich Stickstoff (N₂) und/oder Argon (Ar) und/oder Kohlendioxid (CO₂) bzw. ein entsprechendes Gasgemisch, beispielsweise Luft, zu halten. Ferner ist vorgesehen, daß die Kavität 11* mit einem eine spezifische Wärmeleitfähigkeit von weniger als 0,1 W / (m · K) aufweisenden Gas bzw. Gasgemisch, beispielsweise einem Edelgas und/oder einem Schutzgas, befüllt ist, beispielsweise derart, daß ein in der Kavität 11* herrschender Gasdruck bei 25 °C (Raumtemperatur) mehr als 0,5 bar, beträgt. Nämliches Gas bzw. Gasgemisch kann beispielsweise während der Fertigung des Meßwandler-Gehäuses 11 bzw. des Meßwandlers in die Kavität 11* eingeleitet werden, beispielsweise nämlich indem ein während eines unter einer entsprechenden Schutzgas-Atomsphäre durchgeführten Löt- bzw. Schweißprozesses in die Kavität 11* eingeleitetes (Schutzgas-Gasvolumen durch ein Verschließen nämlicher Kavität darin eingeschlossen wird.

Als Meßwandler 1 kann beispielsweise ein Meßwandler vom Vibrationstyp, nämlich ein wenigstens ein im Betrieb vom Meßstoff durchströmten und währenddessen vibrieren gelassenes Rohr aufweisender Meßwandler dienen. Dementsprechend umfaßt der Meßwandler nach einer weiteren Ausgestaltung der Erfindung ferner wenigstens ein zumindest teilweise innerhalb der Kavität 11* des Meßwandler-Gehäuses 11 angeordnetes Rohr 400, das dafür eingerichtet ist, in einem von einer, beispielsweise metallischen, Rohrwandung umgebenen, beispielsweise mit einem Lumen einer an den Meßwandler angeschlossene Rohrleitung kommunizierenden, Lumen ein als Meßstoff dienliches strömendes Fluid, beispielsweise nämlich eine strömende Flüssigkeit, zu führen. Das wenigstens eine Rohr 400 ist im besonderen ferner auch dafür eingerichtet, vibrieren gelassen zu werden während es von Fluid durchströmt ist. Für diesen Fall kann das wenigstens eine Sensorelement 101 zudem dafür eingerichtet sein, ein als Vibrationen des wenigstens einen Rohrs repräsentierendes Meßsignal s1 dienliches Schwingungssignal zu erzeugen bzw. kann nämliches Sensorelement 101 am wenigstens einen Rohr 400 bzw. in dessen Nähe angeordnet, beispielsweise nämlich mit der Rohrwandung des Rohrs verbunden sein. Zum aktiven Anregen von mechanischen Schwingungen des wenigstens einen Rohrs 400 kann der erfindungsgemäße Meßwandler 1 ferner mit wenigstens einem ebenfalls innerhalb der Kavität 11* positionierten Schwingungserreger 102 ausgerüstet sein.

Zum Verarbeiten des wenigstens einen vom Meßwandler gelieferten Meßsignals s1, ggf. auch zum Bereitstellen eines den Meßwandler 1, beispielsweise nämlich dessen Schwingungserreger 102, ansteuernden bzw. speisenden Treibersignals weist das Feldgerät ferner eine mit dem Meßwandler 1, beispielsweise mittels einer Vielzahl von Verbindungsleitungen, elektrisch verbundene, beispielsweise mittels eines oder mehreren Mikroprozessoren gebildete, Umformer-Elektronik 2 auf. Nämliche Umformer-Elektronik 2 ist nach einer weiteren Ausgestaltung der Erfindung innerhalb eines am Meßwandler 1 gehalterten - beispielsweise aus einem Druckgußmaterial, etwa unter Druck gegossenem Aluminium, oder einem Feingußmaterial, etwa einem Edelstahl, gefertigten - Elektronik-Gehäuse 21 plaziert und dient im besonderen dazu basierend auf dem wenigstens einen vom Meßwandler gelieferten Meßsignal s1 wiederkehrend die wenigstens eine Meßgröße quantifizierende Meßwerte, beispielsweise nämlich Massendurchflußmeßwerte, Dichtemeßwerte, Viskositätsmeßwerte, Volumendurchflußmeßwerte, pH-Meßwerte, Temperaturmeßwerte bzw. Druckmeßwerte, zu ermitteln. Zum Visualisieren solcher, Feldgerät intern erzeugten Meßwerte und/oder ggf. auch von Feldgerät intern generierten Statusmeldungen, wie etwa einer das Feldgerät betreffenden Fehlermeldung oder einen den Meßstoff bzw. den zu überwachenden Prozeß betreffenden Alarm, vor Ort kann das Feldgerät ferner eine zumindest zeitweise mit der Umformer-Elektronik 2 kommunizierendes Anzeige- und Bedieneinheit, etwa mit einem im Elektronik-Gehäuse unmittelbar hinter einem Sichtfenster plazierten LCD- oder TFT-Display und/oder mit integriertem nicht-flüchtigen Datenspeicher für Meß- und/oder für Konfigurationsdaten, aufweisen. Das Feldgerät kann zudem dafür eingerichtet sein, an eine externe, ggf. auch vom Gerät entfernte elektrische Energieversorgung via Anschlußleitungen angeschlossen zu werden, um von dieser im Betrieb mit der elektrischer Energie gespeist zu werden. Falls erforderlich kann das Elektronik-Gehäuse 21, etwa durch Verwendung ausreichend fester Materialien bzw. entsprechenden Materialstärken bzw. durch Realisierung der für Flammendurchschlag- und Explosionssicherheit erforderlichen Spaltmaße, ferner auch so ausgebildet sein, daß es den Anforderungen gemäß Zündschutzart "Druckfeste Kapselung (Ex-d)" bzw. der Norm IEC 60079-1:2007 genügt bzw. daß es einem im Inneren allfällig auftretenden Explosionsdruck von mehr als 50 bar, insb. mehr als 100 bar, zerstörungsfrei standhalten kann.

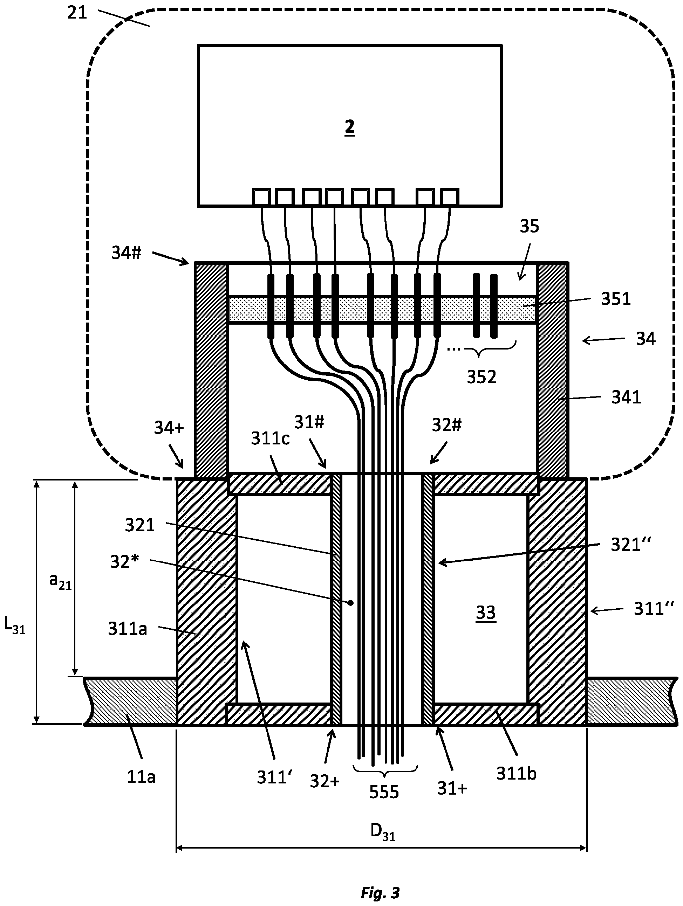

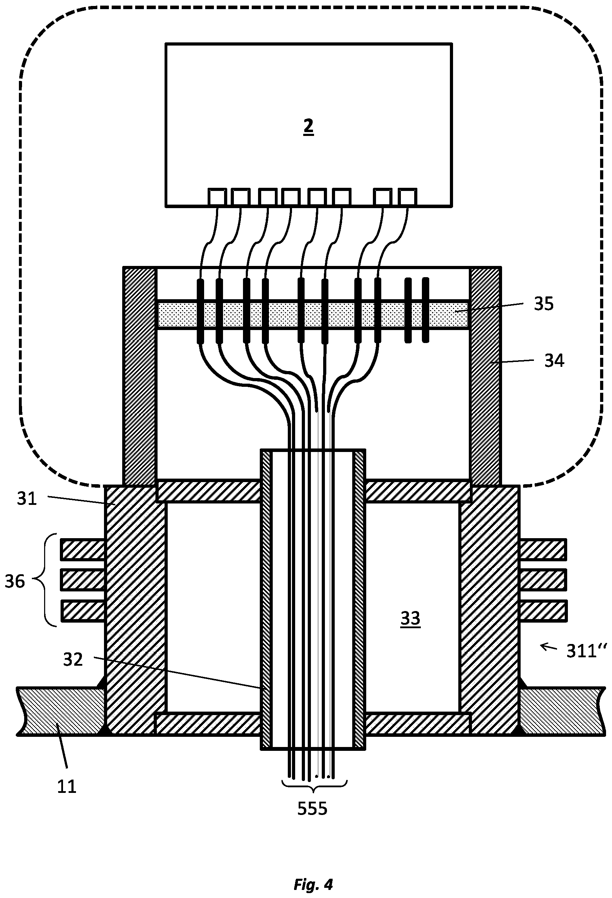

Das - hier als, beispielsweise auch schlag- und/oder druckfestes, Schutzgehäuse für die Umformer-Elektronik 2 des Feldgeräts dienliche - Elektronik-Gehäuse 21 ist, wie in Fig. 3 bzw. 4 schematisch dargestellt bzw. auch aus einer Zusammenschau der Fig. 1, 2a, 2b und 3 bzw. 4 ohne weiteres ersichtlich, am Meßwandler 1, nämlich an dessen Meßwandler-Gehäuse 11 gehaltert, und zwar in einem vorgegebenen (kürzesten) Abstand a₂₁. Nämlicher Abstand a₂₁ berücksichtigt nicht zuletzt auch eine maximale Temperatur des Meßstoffs und eine zulässige Betriebstemperatur der Umformer-Elektronik. Im besonderen ist der Abstand a₂₁ so gewählt, daß jede damit im normalen Betrieb etablierte bzw. innerhalb einer vorgegebenen Spezifikation liegende Temperaturdifferenz zwischen Meßwandler-Gehäuse 11 und Elektronik-Gehäuse 21 ausreicht, um die Betriebstemperatur der Umformer-Elektronik 2 auch bei maximal zulässiger Temperatur des Meßstoffs sicher unterhalb der vorbezeichneten zulässige Betriebstemperatur halten zu können bzw. zu halten.

Zum mechanischen Verbinden des Elektronik-Gehäuses 201 und des Meßwandler-Gehäuses 11 dient eine, beispielsweise zylinderförmige, Anschlußvorrichtung 3. Die erfindungsgemäße, beispielsweise auch als integraler Bestandteil des vorbezeichneten Meßwandlers 1 ausgebildete, Anschlußvorrichtung 3 umfaßt einen Anschlußstutzen 31 mit einem von einer - hier hohlzylindrischen - Stutzenwand 311 umhüllten Lumen sowie einen röhrenförmigen Kabelschacht 32 mit in einem von einer Schachtwand 321 umgebenen, sich von einem ersten Schachtende 32+ bis zu einem davon entfernten zweiten Schachtende 32# erstreckenden Lumen 32* zum Aufnehmen bzw. Führen von elektrischen Verbindungsleitungen 555. Nämliche Verbindungsleitungen 555 können beispielsweise an das Sensorelement 101 bzw. den Schwingungserreger 102 elektrisch angeschlossenen bzw. können jeweils Bestandteil eines vom vorbezeichneten Sensorelement 101 zur Umformer-Elektronik 2 führenden Signalpfades und/oder auch Bestandteil eines von der Umformer-Elektronik 2 zum vorbezeichneten Schwingungserreger 102 sein.

Der Anschlußstutzen 31 der erfindungsgemäßen Anschlußvorrichtung 3 bzw. des damit gebildeten Meßwandlers kann wie aus einer Zusammenschau der Fig. 1, 2a und 2b ohne weiteres ersichtlich, rohrförmigen ausgebildet sein, beispielsweise derart, daß ein - beispielsweise koaxial zum Kabelschacht 32 angeordnetes bzw. im seitlichen Abstand zum Kabelschacht 32 verlaufendes - mittleres Teilsegment 311a der Stutzenwand eine - hier im wesentlichen hohlzylindrische - Röhre bildet. Dementsprechend kann die Stutzenwand 311 zumindest bereichsweise hohlzylindrisch und/oder metallisch sein bzw. kann der Anschlußstutzen 31 in einfacher Weise mittels eines Metallrohrs gebildet sein; der Anschlußstutzen 31 kann aber beispielsweise auch mittels eines Konus gebildet sein, mithin kann die Stutzenwand 321 zumindest bereichsweise trichterförmig sein bzw. zumindest bereichsweise eine kegelstumpfförmige Kontur aufweisen. Nach einer weiteren Ausgestaltung der Erfindung weist der Anschlußstutzen 31 eine Länge L₃₁ auf, die mehr als 50 mm beträgt und/oder weist der Anschlußstutzen einen Außendurchmesser D₃₁ auf, der mehr als 20 mm beträgt. Alternativ oder in Ergänzung ist vorgesehen, daß die vorbezeichnete Länge L₃₁ des Anschlußstutzens 31 wesentlich, insb. nämlich im Verhältnis von mehr als 2:1, größer als der vorbezeichnete Außendurchmesser D₃₁ des Anschlußstutzens 31 ist. Der Anschlußstutzen 31 ist ferner so ausgebildet und so postioniert, daß im Ergebnis die Anschlußvorrichtung 3, wie auch aus Fig. 2a ohne weiteres ersichtlich, zumindest teilweise bzw. überwiegend außerhalb der von der Wandung umhüllten Kavität plaziert ist. Nach einer weiteren Ausgestaltung der Erfindung ist die Anschlußvorrichtung 3 am Meßwandler-Gehäuse 11 fixiert, nämlich mit dessen Wandung 11a dauerhaft bzw. stoffschlüssig verbunden, beispielsweise nämlich angelötet oder angeschweißt. Anschlußstutzen 31 und Meßwandler-Gehäuse 11 können beispielsweise miteinander verbunden sein, indem die Stutzenwand 31, wie auch in Fig. 3 bzw. 4 angedeutet, mit einem dem Meßwandler-Gehäuse 11 zugewandten Ende von deren mittleren Teilsegment 311a mit der Wandung des Meßwandler-Gehäuse 11 fest verbunden ist.

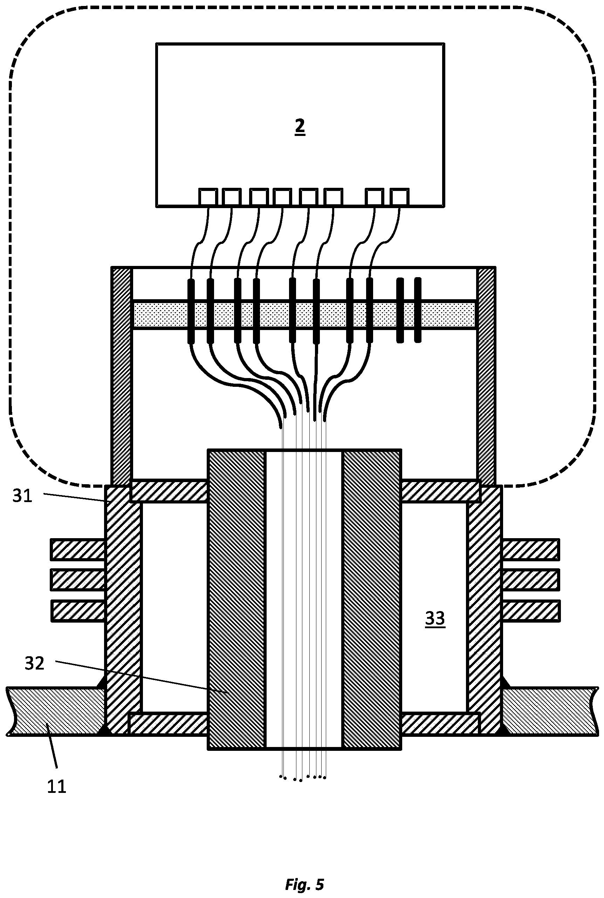

Der Kabelschacht 32 der erfindungsgemäßen Anschlußvorrichtung wiederum kann beispielsweise mittels eines Metallrohrs oder mittels eines Metallschlauchs, beispielsweise nämlich mittels eines Wellenschlauchs, gebildet sein. Dementsprechend ist nach einer weiteren Ausgestaltung ferner vorgesehen, daß die Stutzenwand 311 und/oder die Schachtwand 321 aus Metall besteht, beispielsweise Aluminium oder einem Metall mit einer niedrigen Wärmeleitfähigkeit von weniger als 50 W · m⁻¹ · K⁻¹, wie z.B. Titan (22 W · m⁻¹ · K⁻¹) Edelstahl, insb. ein hochlegierter bzw. austenitischer Stahl (< 20 W · m⁻¹ · K⁻¹). Alternativ oder in Ergänzung können die Stutzenwand 311 und Schachtwand 321 aus einem gleichen Material, beispielsweise nämlich dem gleichen Metall, bestehen. Nach einer weiteren Ausgestaltung der Erfindung weist der Kabelschacht 32 eine Länge auf, die mehr als 50 mm beträgt, und/oder weist der Kabelschacht 32 einen Außendurchmesser auf, der weniger als 10 mm beträgt. Alternativ oder in Ergänzung kann der Kabelschacht 32 so ausgebildet sein, daß dessen Länge wesentlich, beispielsweise nämlich in einem Verhältnis von mehr als 2:1, größer als ein Außendurchmesser des Kabelschachts 32 ist. Desweiteren können der Anschlußstutzen 31 und der Kabelschacht 32 in vorteilhafter Weise auch so ausgebildet sein, das der vorbezeichnete Außendurchmesser des Kabelschachts 32 wesentlich, beispielsweise nämlich im Verhältnis von weniger als 1:2, kleiner als der vorbezeichnete Außendurchmesser des Anschlußstutzens 31 ist. Nach einer weiteren Ausgestaltung der Erfindung ist ferner vorgesehen, daß die Stutzenwand eine Dicke, beispielsweise nämlich eine kleinste Dicke, aufweist, die größer als 1 mm, insb. größer als 2 mm, ist bzw. daß die Schachtwand eine Dicke, beispielsweise nämlich eine kleinste Dicke, aufweist, die größer als 0,5 mm, insb. größer als 1 mm, ist. Alternativ oder in Ergänzung können Anschlußstutzen 31 und Kabelschacht 32 ferner auch so ausgebildet und dimensioniert sein, daß, wie auch aus Fig. 5 ersichtlich, eine Dicke der Schachtwand 321 größer bzw. nicht kleiner ist als eine Dicke der Stutzenwand 311, beispielsweise auch derart, daß die vorbezeichnete kleinste Dicke der Schachtwand 321 größer ist als die vorbezeichnete kleinste Dicke der Stutzenwand 311; falls erforderlich können Anschlußstutzen 31 und Kabelschacht 32 aber auch so ausgebildet und dimensioniert sein, daß die vorbezeichnete kleinste Dicke der Schachtwand 321, wie auch in Fig. 3 angedeutet, kleiner ist als die vorbezeichnete kleinste Dicke der Stutzenwand 311.

Nicht zuletzt aus Gründen einer ggf. erforderlichen erhöhten Betriebssicherheit bzw. eines ggf. erforderlichen Explosionsschutzes ist die Stutzenwand 311 nach einer weiteren Ausgestaltung der Erfindung dafür eingerichtet, einem inneren Überdruck von mehr als 100 bar, beispielsweise - infolge einer sich in der Anschlußeinrichtung 3 ausbreitenden Explosion eines entzündeten Gases - zerstörungsfrei standzuhalten bzw. weist die Stutzenwand 311 einen Berstdruck von mehr als 300 bar auf. Alternativ oder in Ergänzung kann auch der Kabelschacht 321 eingerichtet sein, einem - inneren oder von außen auf die Schachtwand 321 wirkenden - statischen Druck von mehr als 100 bar zerstörungsfrei standzuhalten bzw. kann der Kabelschacht 32 so ausgebildet sein, daß dessen Schachtwand 321 einen Berstdruck von mehr als 300 bar aufweist. Ferner kann der Kabelschacht 32 und/oder kann der Anschlußstutzen 31 auch so ausgebildet sein, daß damit eine - beispielsweise eine Druckfestigkeit von mehr als 100 bar aufweisende bzw. auch eine den Erfordernissen der Norm IEC 60079-1:2007 genügende bzw. gemäß der Zündschutzart "Druckfeste Kapselung (Ex-d)" - druckfeste Kapselung bzw. Verrohrung für innerhalb der Anschlußvorrichtung 3, beispielsweise nämlich innerhalb des Kabelschachts 32, geführte Verbindungsleitungen bereitgestellt ist.

Wie aus Fig. 3 bzw. einer Zusammenschau der Fig. 2b und 3 ohne weiteres ersichtlich, weist die Stutzenwand 321 der erfindungsgemäßen Anschlußvorrichtung 3 eine - hier nämlich in einem dem Meßwandler 1 bzw. dessen Meßwandler-Gehäuse 11 zugewandten ersten stirnseitigen Teilsegment 311b der Stutzenwand verorteten - erste Öffnung 31+ und eine davon entfernte - hier nämlich in einem dem vorbezeichneten stirnseitigen Teilsegement gegenüberliegenden zweiten stirnseitigen Teilsegment 311c der Stutzenwand verorteten - zweite Öffnung 31# auf. Zudem sind der Kabelschacht 32 und der Anschlußstutzen 31 so angeordnet, daß der Kabelschacht 32 anteilig im Lumen des Anschlußstutzens 31 plaziert und anteilig sowohl von der Öffnung 31+ als auch von der Öffnung 31# aufgenommen ist, und daß zwischen einer dem Lumen zugewandte Innenfläche 311' der Stutzenwand 311 und einer dem Lumen zugewandten Mantelfläche 321" der Schachtwand 321 eine - beispielsweise als Ringspalt ausgebildete
bzw. hohlzylinderförmige - Kavität 33 gebildet ist. Nach einer weiteren Ausgestaltung der Erfindung sind der Kabelschacht 32 und der Anschlußstutzen 31 ferner so ausgebildet bzw. so angeordnet, daß die Kavität 33 den Kabelschacht 32 umhüllt. Kabelschacht 32 und der Anschlußstutzen 31 können dementsprechend auch so ausgebildet bzw. so angeordnet sein, daß Kabelschacht 32 und Anschlußstutzen 31 zueinander koaxial verlaufend angeordnet sind bzw. gleichlang sind.

Wie bereits erwähnt, ist die Anschlußvorrichtung im besonderen auch dafür ausgestaltet bzw. vorgesehen, im Betrieb zwischen Meßwandler-Gehäuse 11 und Elektronik-Gehäuse 21 eine Temperaturdifferenz ΔT zu etablieren, die sicherstellt, daß die Betriebstemperatur der Umformer-Elektronik 2 auch bei maximaler Temperatur des Meßstoffs keine unzulässig hohen bzw. nicht mehr spezifizierten Werte annimmt. Dafür ist ein durch die Anschlußvorrichtung bereitgestellter, gleichwohl einem vom Meßwandler-Gehäuse 11 weiter über die Anschlußvorrichtung 3 selbst bis hin zum Elektronik-Gehäuse 21 fließenden Wärmestrom Q̇_{V} entgegenwirkender, mithin nämliche Temperaturdifferenz haltender thermischer Widerstand Rₜₕ entsprechend, nämlich gemäß der bekannten Berechnungsvorschrift Rₜₕ = ΔT / Q̇_{V}, einzustellen. Zwecks Bereitstellung Anschlußvorrichtung mit einem möglichst hohen thermischen Widerstand und mit einer gleichzeitig möglichst niedrigen, mit dem vorbezeichneten kürzesten Abstand a₁₂ zwischen Elektronik-Gehäuse 21 und Meßwandler-Gehäuse 11 korrespondierenden bzw. nämlichen Abstand a₁₂ bestimmenden Baulänge sind erfindungsgemäß der Kabelschacht 32 und der Anschlußstutzen 32 desweiteren so ausgebildet und zudem so - nämlich jeweils im Bereich der Öffnungen 31+, 31# - miteinander verbunden, daß die Kavität 33 ringsum gasdicht geschlossen ist bzw. daß die Kavität 33 gegen eine den Anschlußstutzen 31 bzw. die damit gebildete Anschlußvorrichtung umgebende Atmosphäre hermetisch abgeschlossen ist. Kabelschacht 32 und Anschlußstutzen 31 können dafür - je nach für die Stutzenwand bzw. die Schachtwand jeweils verwendetem Material - beispielsweise stoffschlüssig, beispielsweise nämlich mittels einer Schweiß- bzw. Lötnaht, oder beispielsweise auch adhäsiv, beispielsweise nämlich mittels eines Epoxidharzes bzw. mittels eines Metallklebstoffes, miteinander verbunden sein. Aufgrund des Verschließens der Kavität 33 kann so weder via Öffnungen 31+ noch via Öffnungen 31# ein auf Konvektion basierender Wärmetransport zwischen dem Meßwandler-Gehäuse 11 und Anschlußvorrichtung 3 bzw. zwischen Anschlußvorrichtung 3 und Elektronik-Gehäuse 21 stattfinden bzw. kann ein allfälliger Wärmetransport vom Meßwandler-Gehäuse durch die Anschlußvorrichtung zum Elektronik-Gehäuse im wesentlichen nur auf Wärmeleitung basieren. Durch ein weitgehendes Unterbinden von auf Konvektion basierendem Wärmetransport durch die Anschlußvorrichtung bzw. innerhalb derselben kann der Wärmewiderstand im Vergleich zu konventionellen, auf Konvektion basierenden Wärmetransport ermöglichenden Anschlußvorrichtungen der in Rede stehenden Art bei ansonsten gleichen Abmessungen, nicht zuletzt auch gleicher Baulänge, bzw. kann dementsprechend ein abstandspezifischer thermischer Widerstand Rₜₕ/L₃₁, gemessen als ein Verhältnis des thermischen Widerstands Rₜₕ der Anschlußvorrichtung 3 zur vorbezeichnete Länge L₃₁ des Anschlußstutzens 31 auf sehr einfach Weise nennenswert erhöht werden. Damit einhergehend kann so auch der kürzeste Abstand a₁₂ zwischen Elektronik-Gehäuse 21 und Meßwandler-Gehäuse 11 im Vergleich zu konventionellen Anschlußvorrichtungen bei ansonsten gleicher Spezifikation, nicht zuletzt auch gleicher maximaler Temperatur des Meßstoffs bzw. gleicher maximal zulässiger Betriebstemperatur der Umformer-Elektronik 2, entsprechend verringert werden.

Zwecks einer weiteren Erhöhung des vorbezeichneten abstandspezifischen thermischen Widerstands Rₜₕ/L₃₁ der Anschlußvorrichtung 3 enthält deren Kavität 33 nach einer weiteren Ausgestaltung der Erfindung ein eine spezifische Wärmeleitfähigkeit von weniger als 0,1 W / (m · K) aufweisendes Fluid, insb. nämlich ein Gas wie etwa Stickstoff (N₂), Argon (Ar), Kohlendioxid (CO₂) oder ein anderes Edel- bzw. Schutzgas oder ein wenigstes ein Edel- bzw. Schutzgas enthaltendes Gasgemisch; dies im besonderen auch in der Weise, daß ein in der Kavität 33 herrschender Gasdruck bei 25 °C (Raumtemperatur) weniger als 300 mbar (Millibar) oder mehr als 0,5 bar, beträgt. Dementsprechend sind der Anschlußstutzen 31 und der Kabelschacht 32 nach einer weiteren Ausgestaltung der Erfindung ferner dafür eingerichtet, in der Kavität 33 ein mit einem Gasdruck von 1 bar und/oder mit einem Gasdruck von weniger 0,5 bar auf die Anschlußstutzen- und die Schachtwand wirkendes Gas dauerhaft zu halten bzw. eine Zufuhr von weiterem Gas aus einer den Anschlußstutzen umgebenden Atmosphäre dauerhaft zu verhindern. Nämliches Gas bzw. Gasgemisch kann beispielsweise wiederum während der Fertigung der Anschlußvorrichtung bzw. des Meßwandlers in die Kavität 33 eingeleitet werden, beispielsweise nämlich indem ein während eines unter einer entsprechenden Schutzgas-Atomsphäre durchgeführten Löt- bzw. Schweißprozesses in die Kavität 33 eingeleitetes (Schutzgas-)Gasvolumen durch ein Verschließen nämlicher Kavität 33 darin eingeschlossen wird. Alternativ zu der vorbezeichneten Füllung der Kavität 33 mit einem Gas ist nach einer anderen Ausgestaltung der Erfindung vorgesehen, daß die Kavität 33 zwecks Bereitstellung eines möglichst hohen abstandspezifischen thermischen Widerstands Rₜₕ/L₃₁ zumindest soweit evakuiert, mithin gasfrei ist, daß ein darin herrschender Gasdruck bei 25 °C (Raumtemperatur) weniger als 300 mbar (Millibar) beträgt, mithin in der Kavität 33 zumindest ein Grobvakuum hergestellt ist. Falls erforderlich kann nämlicher Gasdruck in der Kavität 33 auch auf weniger als 1 mbar eingestellt sein, beispielsweise auch derart, daß in der Kavität 33 zumindest ein einem Gasdruck von weniger als 10⁻³ mbar, insb. nämlich weniger als 10⁻⁴ mbar, entsprechendes Hochvakuum hergestellt ist. Das vorbezeichnete Vakuum kann in der Kavität 33 beispielsweise bereits unmittelbar während der Fertigung der Anschlußvorrichtung bzw. des Meßwandlers etabliert werden, beispielsweise nämlich indem ein während eines unter Vakuum, insb. nämlich unter Grob- oder Hochvakuum, durchgeführten Löt- bzw. Schweißprozesses in der Kavität 33 bereits etabliertes Vakuum durch ein Verschließen nämlicher Kavität 33 darin erhalten bleibt.

Nach einer weiteren Ausgestaltung der Erfindung weist der Anschlußstutzen, wie auch in Fig. 4 schematisch dargestellt, auf einer dem Lumen abgewandten Außenfläche 311" der Stutzenwand 311 Kühlrippen 36 auf, die im besonderen dazu dienen, eine Wärme von der Stutzenwand an eine umgebende Atmosphäre abgebende Oberfläche der Stutzenwand zu vergrößern. Indem die Kühlrippen 36 beispielsweise als den Anschlußstutzen umschließende Ringe ausgebildet sind, kann damit zudem auch eine Druckfestigkeit des Anschlußstutzen bei ansonsten gleichen Abmessungen weiter erhöht werden, nicht zuletzt auch bei relativ geringer Dicke der Stutzenwand 311 von etwa 1 mm. Die Kühlrippen 36 können beispielsweise als integraler Bestandteil der Stutzenwand ausgebildet sein oder beispielsweise auch nachträglich auf den Anschlußstutzen aufgeschoben und damit stoffschlüssig, etwa durch Schweißen, verbunden werden. Der thermische Widerstands Rₜₕ/L₃₁ der Anschlußvorrichtung kann zudem auch dadurch auf einfache Weise weiter erhöht werden, indem Anschlußstutzen 31 und Kabelschacht 32, wie bereits erwähnt bzw. wie in Fig. 5 schematisch dargestellt, so ausgebildet und dimensioniert sind, daß eine Dicke der Schachtwand 321 größer ist als eine Dicke der Stutzenwand 311.

Nach einer weiteren Ausgestaltung der Erfindung weist die Stutzenwand 311, wie auch in Fig. 3 schematisch dargestellt, ein die Öffnung 31+ fassendes erstes endständiges - hier dem Meßwandler 10 bzw. dessen Meßwandler-Gehäuse 100 zugewandtes - Teilsegment 311b bzw. weist die Stutzenwand 311 ein die Öffnung 31# fassendes zweites endständiges - nämlich dem Meßwandler 10 abgewandtes bzw. von dessen Meßwandler-Gehäuse 100 entferntes - Teilsegment 311c auf. Nicht zuletzt zwecks Vermeidung zu hoher mechanischer Spannungen innerhalb der Stutzenwand 31, insb. in einem Bereich um die Öffnung 31+ und/oder in einem Bereich um die Öffnung 31#, bzw. innerhalb des Kabelschachts 32 kann wenigstens eines der Teilsegmente 311b, 311c ferner in Richtung einer gedachten Längsachse des Kabelschachts axial nachgiebig ausgebildet sein. Beispielsweise kann das Teilsegment 311b eine axiale

Nachgiebigkeit aufweisen, die eine Differenz zwischen, beispielsweise thermisch bedingten, Längenänderungen des Anschlußstutzens 31 und/oder des Kabelschachts 32 von wenigstens 0,1 mm zerstörungsfrei ermöglicht, bzw. kann das Teilsegment 311b dafür eingerichtet sein, auf eine Differenz zwischen einer zeitlich ändernden relativen Längenänderungen des Anschlußstutzens 31 und einer zeitlich ändernden relativen Längenänderungen des Kabelschachts 32 von 0,1% oder weniger mit einer reversiblen Verformung zu reagieren. Dementsprechend kann das Teilsegment 311b, wie auch in Fig. 3 angedeutet, membranartige ausgebildet sein bzw. kann das Teilsegment 311b zumindest anteilig mittels einer dünnen, nämlich eine im Vergleich zu einem Durchmesser wesentlich, beispielsweise nämlich im Verhältnis von weniger als 1:5, geringere Dicke aufweisenden Scheibe gebildet sein. Alternativ oder in Ergänzung kann auch das Teilsegment 311c membranartige ausgebildet sein bzw. zumindest anteilig mittels einer dünnen Scheibe gebildet sein. Die vorbezeichnete Differenz zwischen relativen Längenänderungen von Anschlußstutzen 31 und Kabelschacht 32 kann beispielsweise aus einer zeitlich ändernden Temperaturverteilung innerhalb der Anschlußeinrichtung, einhergehend mit zeitlich ändernden Temperaturdifferenzen zwischen Stutzenwand und Schachtwand bzw. mit zeitlich ändernden, gleichwohl divergierenden relativen Längenänderungen von Stutzenwand und Schachtwand, resultieren.

Nach einer weiteren Ausgestaltung der Erfindung weist die Anschlußvorrichtung 3 ferner einen mit dem Anschlußstutzen 31 - hier nämlich mit einem dem Meßwandler bzw. dem Meßwandler-Gehäuse abgewandten Ende des Anschlußstutzens 31 - fest verbundenen bzw. daran angeformten Anschlußkopf 34 mit einer sich von einem dem Anschlußstutzen 31 und dem Kabelschacht 32 zugewandten ersten Ende 34+ bis zu einem von Anschlußstutzen 31 und Kabelschacht 32 entfernten zweiten Ende 34# erstreckende Wandung 341 sowie einer von nämlicher Wandung 341 umhüllten Lumen auf. Anschlußkopf 34 und Anschlußstutzen 31 können beispielsweise dadurch miteinander verbunden sein, indem die Wandung 341 an deren Ende 34+ ringsum gas- bzw. druckdicht mit der Stutzenwand 311 verbunden ist, sei es durch nachträgliches Zusammenfügen, etwa durch Herstellen eines Stoffschlusses, oder durch Bilden eines sowohl den Anschlußkopf 34 als den Anschlußstutzen 31 umfassenden monolithischen Formteils. Wie in Fig. 3 schematisch dargestellt, kann das Ende 34+ der Wandung 341 beispielsweise direkt an ein dem Anschlußkopf 34 zugewandtes stirnseitiges Ende von dem erwähnten mittleren Teilsegment 311a der Stutzenwand 311 angrenzen bzw. damit verbunden sein. Die Wandung 341 des - beispielsweise holzylindrischen bzw. hülsenförmigen - Anschlußkopfs 34 kann beispielsweise durch Schweißen bzw. Löten stoffschlüssig mit der Stutzenwand 311 verbunden oder, wie bereits erwähnt, beispielsweise auch integraler Bestandteil eines zusammen mit der Stutzenwand 311 gebildeten monolithischen Formteils sein. Dementsprechend können die Wandung 341 des Anschlußkopfs und die Stutzenwand 311 in vorteilhafter Weise auch aus dem gleichen Material hergestellt sein und/oder kann nämliche Wandung 341 metallisch sein, beispielsweise nämlich aus einem Edelstahl oder Aluminium hergestellt sein. Nach einer weiteren Ausgestaltung der Erfindung sind Anschlußstutzen 31, Kabelschacht 32 und Anschlußkopf 34 ferner so ausgebildet und angeordnet, daß das Lumen des Kabelschachts 32 mit dem Lumen des Anschlußkopfs 34 kommuniziert bzw. der Kabelschacht in nämliches Lumen mündet. Falls erforderlich, kann der Kabelschacht 32 an zumindest einem seiner Enden 32+, 32# auch mittels eines die Verbindungsleitungen fassenden bzw. bündelnden Stopfens verschlossen sein; dies ggf. auch druck - bzw. gasdicht.

Der Anschlußkopf 34 ist, wie auch aus Fig. 3 bzw. einer Zusammenschau der Fig. 1, 2a, 2b und 3 ohne weiteres ersichtlich, im besonderen dafür eingerichtet, mit dem vorbezeichneten Elektronik-Gehäuse 21, insb. wieder lösbar, mechanisch verbunden zu werden bzw. eine feste mechanische Verbindung zwischen Elektronik-Gehäuse 21 und Anschlußstutzen 31 bereitzustellen. Dementsprechend weist die Wandung 341 des Anschlußkopfes 34 nach einer weiteren Ausgestaltung der Erfindung zumindest im Bereich des Endes 34# ein Außengewinde auf. Nämliches Außengewinde ist im besonderen dafür eingerichtet, mit einem komplementären Innengewinde eines Elektronik-Gehäuses verschraubt zu werden. Alternativ dazu kann der Anschlußkopf aber auch einen Verbindungsflansch aufweisen, der dafür eingerichtet ist, mit einem komplementären Verbindungsflansch eines Elektronik-Gehäuses, beispielsweise auch wieder lösbar, verbunden zu werden.

Nach einer weiteren Ausgestaltung der Erfindung umfaßt die Anschlußvorrichtung 3 ferner eine Durchführung 35, die insb. dafür vorgesehen bzw. dafür eingerichtet ist, an im Kabelschacht 32 geführte elektrische Verbindungsleitungen 555 angeschlossen zu werden bzw. mittels nämlicher elektrischen Verbindungsleitungen 555 gebildete Strom- bzw. Signalpfade in einen Innenraum des von der Anschlußvorrichtung 2 gehalterten, beispielsweise nämlich in der vorbezeichneten Weise mit dem Anschlußkopf 34 verbundenen, Elektronik-Gehäuses 21 weiterzuführen. Nämliche Durchführung 35 ist, wie auch Fig. 3 schematisch dargestellt, innerhalb des Lumens des Anschlußkopfes 34 plaziert, beispielsweise in der Nähe des Endes 34#, bzw. von der Wandung 341 des Anschlußkopfes 34 gefaßt. Die Durchführung 35 kann aus einem Glas, einer Keramik oder einem Kunststoff, mithin einem elektrisch nicht leitenden Material hergestellt sein, beispielsweise derart, daß in - einem aus Glas, Keramik bzw. Kunststoff entsprechend hergestellten - monolithischen Grundkörper 351 als Stromschienen dienliche Kontaktstifte 352 voneinander beabstandet, gleichwohl voneinander elektrisch isoliert eingebettet sind. Anschlußkopf 34 und Durchführung 35 können ferner so ausgebildet und miteinander verbunden sein, daß innerhalb des Anschlußkopfs 34 in einem Bereich zwischen dem Ende 34+ (bzw. dem korrespondierenden Ende 31# des Anschlußstutzens 31 bzw. dessen Stutzenwand 311) und der Durchführung 35 eine nach außen, insb. hermetisch, geschlossene Kavität gebildet ist, beispielsweise derart, daß mittels des Anschlußstutzens 31, des Anschlußkopfs 34 sowie der darin gehaltenen Durchführung 35, ggf. auch im Zusammenspiel mit dem Kabelschacht 32 und dem Meßwandler-Gehäuse 11, eine druckfeste, beispielsweise nämlich eine Druckfestigkeit von mehr als 100 bar aufweisende, Kapselung für darin geführte Verbindungsleitungen gebildet ist. Nämliche Kapselung kann in vorteilhafter Weise zudem so ausgebildet sein, daß sie den Erfordernissen der Norm IEC 60079-1:2007 bzw. der Zündschutzart "Druckfeste Kapselung (Ex-d)" genügt.

## Patentansprüche

1. Anschlußvorrichtung zum mechanischen Verbinden eines Elektronik-Gehäuses, nämlich eines Schutzgehäuses für eine Elektronik, insb. eine Umformer-Elektronik, und eines Meßwandler-Gehäuses, nämlich eines Schutzgehäuses für wenigstens ein, insb. physikalisch-zu-elektrisches, Sensorelement, welche Anschlußvorrichtung umfaßt:
- einen, insb. rohrförmigen und/oder mittels eines Metallrohrs gebildeten, Anschlußstutzen (31) mit einem von einer, insb. metallischen und/oder zumindest bereichsweise hohlzylindrischen, Stutzenwand (311) umhüllten Lumen;
- sowie einen, insb. mittels eines Metallrohrs oder eines Metallschlauchs gebildeten, röhrenförmigen Kabelschacht (32) mit in einem von einer Schachtwand (32a) umgebenen, sich von einem ersten Schachtende (32+) bis zu einem davon entfernten zweiten Schachtende (32#) erstreckenden Lumen (32*) zum Führen von elektrischen Verbindungsleitungen;
- wobei die Stutzenwand bzw. der damit gebildete Anschlußstutzen eine erste Öffnung (31+) und eine davon entfernte zweite Öffnung (31#) aufweist;
- wobei Kabelschacht und Anschlußstutzen so angeordnet sind,
-- daß der Kabelschacht anteilig im Lumen des Anschlußstutzens plaziert und anteilig sowohl von der ersten Öffnung der Stutzenwand des Anschlußstutzens als auch von der zweiten Öffnung der Stutzenwand des Anschlußstutzens aufgenommen ist,
-- und daß zwischen einer dem Lumen zugewandte Innenfläche (311') der Stutzenwand und einer dem Lumen zugewandten Mantelfläche (321") der Schachtwand eine, insb. einzige und/oder als Ringspalt ausgebildete, Kavität (33) gebildet ist;
- und wobei Kabelschacht und Anschlußstutzen so miteinander, insb. stoffschlüssig oder adhäsiv, verbunden sind, daß die Kavität (33) gasdicht, insb. nämlich zumindest luftdicht, geschlossen ist, insb. derart, daß die Kavität gegen eine den Anschlußstutzen bzw. die Anschlußvorrichtung umgebende Atmosphäre hermetisch abgeschlossen ist.

2. Anschlußvorrichtung nach einem der vorherigen Ansprüche, wobei der Anschlußstutzen und der Kabelschacht dafür eingerichtet sind, in der Kavität (33) ein, insb. mit einem Gasdruck von 1 bar auf die Stutzen- und die Schachtwand wirkendes, Gas, insb. Stickstoff (N₂), Argon (Ar), Kohlendioxid (CO₂), zu halten.

3. Anschlußvorrichtung nach einem der Ansprüche 1 bis 2, wobei die Kavität (33) ein, insb. eine spezifische Wärmeleitfähigkeit von weniger als 0,1 W / (m · K) aufweisendes und/oder gasförmiges, Fluid, insb. Stickstoff (N₂), Argon (Ar), Kohlendioxid (CO₂), enthält.

4. Anschlußvorrichtung nach dem vorherigen Anspruch, wobei die Kavität (33) mit einem, insb. eine spezifische Wärmeleitfähigkeit von weniger als 0,1 W / (m · K) aufweisenden, Gas bzw. Gasgemisch, insb. einem Edelgas und/oder einem Schutzgas, befüllt ist, insb. derart, daß ein in der Kavität (33) herrschender Gasdruck bei 25 °C weniger als 300 mbar oder mehr als 0,5 bar beträgt.

5. Anschlußvorrichtung nach einem der Ansprüche 1 bis 2, wobei die Kavität (33) zumindest soweit evakuiert/gasfrei ist, daß ein darin herrschender Gasdruck bei 25 °C weniger als 300 mbar, insb. weniger als 1 mbar, beträgt, insb. derart, daß der Gasdruck bei 25 °C (Raumtemperatur) weniger als 10⁻³ mbar, insb. nämlich weniger als 10⁻⁴ mbar, beträgt.

6. Anschlußvorrichtung nach einem der vorherigen Ansprüche,
- wobei der Kabelschacht eingerichtet ist, einem statischen Druck von mehr als 100 bar zerstörungsfrei standzuhalten; und/oder
- wobei die Schachtwand des Kabelschachts einen Berstdruck von mehr als 300 bar aufweist; und/oder
- wobei mittels des Kabelschachts eine, insb. den Erfordernissen der Norm IEC 60079-1:2007 genügende bzw. gemäß der Zündschutzart "Druckfeste Kapselung (Ex-d)" ausgebildete und/oder eine Druckfestigkeit von mehr als 100 bar aufweisende, druckfeste Kapselung für darin geführte Verbindungsleitungen gebildet ist; und/oder
- wobei die Stutzenwand aus Metall, insb. einem Edelstahl, besteht; und/oder
- wobei die Schachtwand aus Metall, insb. einem Edelstahl oder Titan, besteht; und/oder
- wobei die Stutzenwand und Schachtwand aus gleichem Material bestehen; und/oder
- wobei der Kabelschacht mittels eines Metallschlauchs, insb. nämlich mittels eines Wellenschlauchs, gebildet ist; und/oder
- wobei die Stutzenwand einen Berstdruck von mehr als 300 bar aufweist; und/oder
- wobei der Anschlußstutzen auf einer dem Lumen abgewandten Außenfläche (311") der Stutzenwand, insb. nämlich als integraler Bestandteil der Stutzenwand ausgebildete, Kühlrippen aufweist; und/oder
- wobei die Stutzenwand eine, insb. kleinste, Dicke aufweist, die größer als 1 mm, insb. größer als 2 mm ist; und/oder
- wobei die Schachtwand eine, insb. kleinste, Dicke aufweist, die größer als 0,5 mm, insb. größer als 1 mm ist; und/oder
- wobei die Schachtwand eine, insb. kleinste, Dicke aufweist, die größer ist als eine, insb. kleinste, Dicke der Stutzenwand ist; und/oder
- wobei Kabelschacht (32) und Anschlußstutzen (31) gleichlang sind; und/oder
- wobei Kabelschacht (32) und Anschlußstutzen (31) zueinander koaxial verlaufend angeordnet sind; und/oder
- wobei der Anschlußstutzen eine Länge aufweist, die mehr als 50 mm beträgt, und/oder die wesentlich, insb. nämlich im Verhältnis von mehr als 2:1, größer als ein Außendurchmesser des Anschlußstutzens ist; und/oder
- wobei der Anschlußstutzen einen Außendurchmesser aufweist, der mehr als 20 mm beträgt; und/oder
- wobei der Kabelschacht eine Länge aufweist, die mehr als 50 mm beträgt, und/oder die wesentlich, insb. nämlich im Verhältnis von mehr als 2:1, größer als ein Außendurchmesser des Kabelschachts ist; und/oder
- wobei der Kabelschacht einen Außendurchmesser aufweist, der weniger als 10 mm beträgt, und/oder der wesentlich, insb. nämlich im Verhältnis von weniger als 1:2, kleiner als ein Außendurchmesser des Anschlußstutzens ist.

7. Anschlußvorrichtung nach einem der vorherigen Ansprüche, wobei die Stutzenwand ein die erste Öffnung fassendes, insb. membranartiges und/oder in Richtung einer gedachten Längsachse des Kabeischachts axial nachgiebiges, erstes endständiges Teilsegment aufweist.

8. Anschlußvorrichtung nach dem vorherigen Anspruch,
- wobei das erste endständige Teilsegment der Stutzenwand dafür eingerichtet ist, auf eine - insb. aus einer zeitlich ändernden Temperaturdifferenz zwischen Stutzenwand und Schachtwand resultierende - Differenz zwischen einer zeitlich ändernden relativen Längenänderungen des Anschlußstutzens und einer zeitlich ändernden relativen Längenänderungen des Kabelschachts mit einer reversiblen Verformung zu reagieren; und/oder
- wobei das erste endständige Teilsegment der Stutzenwand zumindest anteilig mittels einer dünnen, nämlich eine im Vergleich zu einem Durchmesser wesentlich, insb. nämlich im Verhältnis von weniger als 1:5, geringere Dicke aufweisenden Scheibe gebildet ist; und/oder
- wobei das erste endständige Teilsegment der Stutzenwand eine axiale Nachgiebigkeit aufweist, die eine Differenz zwischen Längenänderungen des Anschlußstutzens und/oder des Kabelschachts von wenigstens 0,1 mm zerstörungsfrei ermöglicht.

9. Anschlußvorrichtung nach Anspruch 7 oder 8, wobei die Stutzenwand ein die zweite Öffnung fassendes, insb. membranartiges und/oder in Richtung einer gedachten Längsachse des Kabelschachts axial nachgiebiges, zweites endständiges Teilsegment aufweist.

10. Anschlußvorrichtung nach dem vorherigen Anspruch,
- wobei das zweite endständige Teilsegment der Stutzenwand dafür eingerichtet ist, auf eine - insb. aus einer zeitlich ändernden Temperaturdifferenz zwischen Stutzenwand und Schachtwand resultierende - Differenz zwischen einer zeitlich ändernden relativen Längenänderungen des Anschlußstutzens und einer zeitlich ändernden relativen Längenänderungen des Kabelschachts mit einer reversiblen Verformung zu reagieren; und/oder
- wobei das zweite endständige Teilsegment der Stutzenwand zumindest anteilig mittels einer dünnen, nämlich eine im Vergleich zu einem Durchmesser wesentlich, insb. nämlich im Verhältnis von weniger als 1:5, geringere Dicke aufweisenden Scheibe gebildet ist; und/oder
- wobei das zweite endständige Teilsegment der Stutzenwand eine axiale Nachgiebigkeit aufweist, die eine Differenz zwischen Längenänderungen des Anschlußstutzens und/oder des Kabelschachts von wenigstens 0,1 mm zerstörungsfrei ermöglicht; und/oder
- wobei das erste endständige Teilsegment der Stutzenwand und das zweite endständige Teilsegment der Stutzenwand eingerichtet sind, eine Differenz zwischen Längenänderungen des Anschlußstutzens und des Kabelschachts von wenigstens 0,1 mm zerstörungsfrei zu ermöglichen, insb. indem das erste endständige Teilsegment der Stutzenwand und das zweite endständige Teilsegment der Stutzenwand insgesamt eine axiale Nachgiebigkeit aufweisen, die eine Differenz zwischen Längenänderungen des Anschlußstutzens und des Kabelschachts von wenigstens 0,1 mm zerstörungsfrei ermöglicht.

11. Anschlußvorrichtung nach einem der vorherigen Ansprüche, wobei ein - insb. im seitlichen Abstand zum Kabelschacht verlaufendes und/oder koaxial zum Kabelschacht angeordnetes - mittleres Teilsegment der Stutzenwand eine, insb. hohlzylindrische, Röhre bildet.

12. Anschlußvorrichtung nach einem der vorherigen Ansprüche, weiters umfassend: einen mit dem Anschlußstutzen verbundenen - insb. holzylindrischen und/oder hülsenförmigen - Anschlußkopf (34) mit einer sich von einem dem Anschlußstutzen und dem Kabelschacht zugewandten ersten Ende bis zu einem von Anschlußstutzen und Kabelschacht entfernten zweiten Ende erstreckende - insb. metallische und/oder mit der Stutzenwand stoffschlüssig verbundene - Wandung sowie einem von nämlicher Wandung umhüllten Lumen, welcher Anschlußkopf dafür eingerichtet ist, mit einem Elektronik-Gehäuse, insb. wieder lösbar, mechanisch verbunden zu werden.

13. Anschlußvorrichtung nach Anspruch 11 und 12, wobei die Wandung des Anschlußkopfs am ersten Ende, insb. gasdicht und/oder stoffschlüssig, mit der Stutzenwand - insb. nämlich mit einem dem Anschlußkopf zugewandten Ende von deren mittleren Teilsegment - verbunden ist, insb. derart, daß das Lumen des Kabelschachts mit dem Lumen des Anschlußkopfs kommuniziert bzw. in nämliches Lumen mündet.

14. Anschlußvorrichtung nach einem der Ansprüche 12 bis 13, wobei Anschlußkopf, Anschlußstutzen und Kabelschacht so angeordnet sind, daß das Lumen des Kabelschachts mit dem Lumen des Anschlußkopfs kommuniziert.

15. Anschlußvorrichtung nach einem der Ansprüche 12 bis 14, weiters umfassend: eine dem Anschluß von im Kabelschacht geführten elektrischen Verbindungsleitungen dienliche, insb. aus Glas, Keramik oder einem Kunststoff hergestellte, Durchführung, wobei die Durchführung innerhalb des Lumens des Anschlußkopfes plaziert und/oder von der Wandung des Anschlußkopfes gefaßt ist.

16. Anschlußvorrichtung nach einem der Ansprüche 12 bis 15, wobei die Wandung des Anschlußkopfes zumindest im Bereich des zweiten Endes ein Außengewinde aufweist, insb. ein Außengewinde, das dafür eingerichtet ist, mit einem komplementären Innengewinde eines Elektronik-Gehäuses verschraubt zu werden.

17. Anschlußvorrichtung nach einem der Ansprüche 12 bis 15, wobei der Anschlußkopf einen Verbindungsflansch aufweist, der dafür eingerichtet ist, mit einem komplementären Verbindungsflansch eines Elektronik-Gehäuses, insb. wieder lösbar, verbunden zu werden.

18. Meßwandler, umfassend:
- ein Meßwandler-Gehäuse (11) mit einer von einer, insb. metallischen, Wandung (11a) umhüllten Kavität (11*);
- ein zumindest teilweise innerhalb nämlicher Kavität (11*) positioniertes Sensorelement, das dafür eingerichtet ist, eine Meßgröße eines, insb. fluiden, Meßstoffs zu erfassen und wenigstens ein nämliche Meßgröße repräsentierendes Meßsignal zu generieren;
- sowie eine Anschlußvorrichtung gemäß einem der vorherigen Ansprüche, wobei die Anschlußvorrichtung am Meßwandler-Gehäuse fixiert, insb. nämlich mit dessen Wandung stoffschlüssig verbunden, ist.

19. Meßwandler nach dem vorherigen Anspruch,
- wobei die Anschlußvorrichtung zumindest teilweise, insb. überwiegend, außerhalb der von der Wandung umhüllten Kavität des Meßwandler-Gehäuses plaziert ist; und/oder
- wobei das Meßwandler-Gehäuse dafür eingerichtet ist, in der Kavität (11*) des Meßwandler-Gehäuses ein, insb. mit einem Gasdruck von 1 bar auf die Stutzen- und die Wandung (11a) wirkendes und/oder eine spezifische Wärmeleitfähigkeit von weniger als 0,1 W / (m · K) aufweisendes, Gas, insb. Stickstoff (N₂) und/oder Argon (Ar) und/oder Kohlendioxid (CO₂) bzw. Luft, zu halten; und/oder
- wobei die Kavität (11*) des Meßwandler-Gehäuses mit einem, insb. eine spezifische Wärmeleitfähigkeit von weniger als 0,1 W / (m · K) aufweisenden, Gas bzw. Gasgemisch, insb. einem Schutzgas, befüllt ist, insb. derart, daß ein in der Kavität (11*) des Meßwandler-Gehäuses herrschender Gasdruck bei 25 °C (Raumtemperatur) mehr als 0,5 bar, beträgt; und/oder
- wobei ein - insb. im seitlichen Abstand zum Kabelschacht verlaufendes und/oder zum Kabelschacht angeordnetes - mittleres Teilsegment der Stutzenwand eine, insb. hohlzylindrische, Röhre bildet und wobei die Stutzenwand mit einem dem Meßwandler-Gehäuse (11) zugewandten Ende von deren mittleren Teilsegment, insb. stoffschlüssig, mit der Wandung des Meßwandler-Gehäuse (11) verbunden, insb. nämlich verlötet oder verschweißt, ist.

20. Meßwandler nach einem der Ansprüche 19 bis 20,
- weiters umfassend: wenigstens ein zumindest teilweise innerhalb der Kavität des Meßwandler-Gehäuses angeordnetes Rohr (400), das dafür eingerichtet ist, in einem von einer, insb. metallischen, Rohrwandung umgebenen Lumen ein strömendes Fluid, insb. eine strömende Flüssigkeit, zu führen, insb. nämlich vibrieren gelassen zu werden, während es von Fluid durchströmt ist; und/oder
- weiters umfassend: wenigstens einen innerhalb der Kavität (11*) des Meßwandler-Gehäuses positionierten Schwingungserreger (102), der dafür eingerichtet ist, das wenigstens eine Rohr zu mechanischen Schwingungen anzuregen.

21. Feldgerät, umfassend: einen Meßwandler gemäß einem der Ansprüche 19 bis 21 sowie eine, insb. mittels im Kabelschacht geführter elektrischer Verbindungsleitungen, mit nämlichem Meßwandler - insb. nämlich einem zumindest teilweise innerhalb der Kavität (11*) des Meßwandler-Gehäuses (11) positionierten Sensorelement des Meßwandlers und/oder einem innerhalb der Kavität (11*) des Meßwandler-Gehäuses (11) positionierten Schwingungserreger des Meßwandlers - elektrisch verbundene Umformer-Elektronik.

22. Feldgerät nach dem vorherigen Anspruch, weiters unfassend: ein Elektronik-Gehäuse (21), nämlich ein Schutzgehäuse für die Umformer-Elektronik (2),
- wobei die, insb. mittels im Kabelschacht geführter elektrischer Verbindungsleitungen mit dem Meßwandler elektrisch verbundene, Umformer-Elektronik innerhalb des Elektronik-Gehäuses (21) plaziert ist,
- und wobei das Elektronik-Gehäuse (21), insb. wiederlösbar, mit der Anschlußvorrichtung (3) mechanisch verbunden ist.

## Claims

1. Connection device for the mechanical connection of an electronics housing, specifically a protection housing for an electronics unit, specifically a transmitter electronics unit, and a transducer housing, specifically a protection housing for at least a sensor element, particularly physical to electrical, said connection device comprising:
- a connection nozzle (31), particularly tubular and/or formed by means of a metal tube, with an interior channel surrounded by a nozzle wall (311), particularly metal and/or at least partially hollow cylindrical;
- as well as a tubular cable duct (32), formed particularly by means of a metal tube or a metal hose, with an interior channel (32*) designed to guide electrical connecting cables, said interior channel being surrounded by a duct wall (32a) and extending from a first duct end (32+) to a second duct end (32#) at a distance therefrom;
- wherein the nozzle wall or the connection nozzle formed with said wall has a first opening (31+) and a second opening (31#) at a distance therefrom;
- wherein the cable duct and the connection nozzle are arranged in such a way that
-- the cable duct is partially positioned in the interior channel of the connection nozzle and is partially accommodated by both the first opening in the wall of the connection nozzle and by the second opening in the wall of the connection nozzle,
-- and that a cavity (33), specifically a single cavity and/or a cavity formed as an open ring junction, is formed between an interior surface (311') of the nozzle wall facing towards the interior channel and a lateral surface (321") of the duct wall facing towards the interior channel;
- and wherein the cable duct and the connection nozzle are interconnected, particularly via a substance-to-substance or adhesive connection, in such a way that the cavity (33) is closed in a gas-tight manner, particularly at least in an airtight manner, specifically in such a way that the cavity is hermetically sealed against an atmosphere surrounding the connection nozzle or the connection device.

2. Connection device as claimed in one of the previous claims, wherein the connection nozzle and the cable duct are designed to hold a gas in the cavity (33), particularly nitrogen (N₂), argon (Ar), carbon dioxide (CO₂), acting on the nozzle wall and duct wall, particularly with a gas pressure of 1 bar.

3. Connection device as claimed in one of the Claims 1 to 2, wherein the cavity (33) contains a fluid, particularly nitrogen (N₂), argon (Ar), carbon dioxide (CO₂), which has a specific thermal conductivity of less than 0.1 W / (m • K), and/or which is a gaseous fluid.

4. Connection device as claimed in the previous claim, wherein the cavity (33) is filled with a gas or gas mixture with a specific thermal conductivity of less than 0.1 W/(m • K), specifically a noble gas and/or a shielding gas, particularly in such a way that a gas pressure present in the cavity (33) is less than 300 mbar or greater than 0.5 bar at 25 °C.

5. Connection device as claimed in one of the Claims 1 to 2, wherein the cavity (33) is evacuated/gas-free at least to such an extent that a gas pressure present in the cavity is less than 300 mbar, particularly less than 1 mbar at 25 °C, particularly in such a way that the gas pressure at 25 °C (room temperature) is less than 10⁻³ mbar, specifically less than 10⁻⁴ mbar.

6. Connection device as claimed in one of the previous claims,
- wherein the cable duct is designed to withstand a static pressure of more than 100 bar without destruction; and/or
- wherein the wall of the cable duct has a burst pressure of more than 300 bar; and/or
- wherein a flameproof enclosure is formed by means of the cable duct for the connecting cables routed in the duct, particularly an enclosure that meets the requirements of standard IEC 60079-1:2007 or which is designed according to the «Flameproof enclosure (Ex-d)» type of protection and/or which has a pressure resistance greater than 100 bar; and/or
- wherein the nozzle wall is made from metal, particularly a stainless steel; and/or
- wherein the duct wall is made from metal, particularly stainless steel or titanium; and/or
- wherein the nozzle wall and duct wall are made from the same material; and/or
- wherein the cable duct is formed by means of a metal hose, specifically by means of a corrugated tube; and/or
- wherein the nozzle wall has a burst pressure of over 300 bar; and/or
- wherein the connection nozzle has cooling fins on an exterior surface (311") of the nozzle wall facing away from the interior channel, particularly cooling fins that are an integral part of the nozzle wall; and/or
- wherein the nozzle wall has a thickness, particularly a minimal thickness, which is greater than 1 mm, particularly greater than 2 mm; and/or
- wherein the duct wall has a thickness, particularly a minimal thickness, which is greater than 0.5 mm, particularly greater than 1 mm; and/or
- wherein the duct wall has a thickness, particularly a minimal thickness, which is greater than a thickness, particularly a minimal thickness, of the nozzle wall; and/or
- wherein the cable duct (32) and the connection nozzle (31) are of equal length; and/or
- wherein the cable duct (32) and the connection nozzle (31) are arranged in a coaxial manner in relation to one another; and/or
- wherein the connection nozzle has a length, which is greater than 50 mm, and/or which is substantially greater than an outer diameter of the connection nozzle, particularly with a ratio of more than 2:1; and/or
- wherein the connection nozzle has an outer diameter, which is greater than 20 mm;
- wherein the cable duct has a length, which is greater than 50 mm and/or which is substantially greater than an outer diameter of the cable duct, particularly with a ratio of more than 2:1; and/or
- wherein the cable duct has an outer diameter, which is less than 10 mm and/or which is essentially less than an outer diameter of the connection nozzle, particularly with a ratio of less than 1:2.

7. Connection device as claimed in one of the previous claims, wherein the nozzle wall has a first terminal partial segment which comprises the first opening, particularly a membrane-like segment and/or a segment that is axially flexible in the direction of a imaginary longitudinal axis of the cable duct.

8. Connection device as claimed in the previous claim,
- wherein the first terminal partial segment of the nozzle wall is designed to react with a reversible deformation to a difference, particularly resulting from a change in temperature over time between the nozzle wall and the duct wall, between a change in the relative length of the connection nozzle over time and a change in the relative length of the cable duct over time; and/or
- wherein the first terminal partial segment of the nozzle wall is at least partially formed by a thin disk, particularly a disk with a thickness that is substantially less than a diameter, particularly with a ratio of less than 1:5; and/or
- wherein the first terminal partial segment of the nozzle wall has an axial flexibility which enables a difference between changes in the length of the connection nozzle and/or of the cable duct of at least 0.1 mm in a non-destructive manner.

9. Connection device as claimed in Claim 7 or 8, wherein the nozzle wall has a second terminal partial segment which comprises the second opening, particularly a membrane-like segment and/or a segment that is axially flexible in the direction of an imaginary longitudinal axis of the cable duct.

10. Connection device as claimed in the previous claim,
- wherein the second terminal partial segment of the nozzle wall is designed to react with a reversible deformation to a difference, particularly resulting from a change in temperature over time between the nozzle wall and the duct wall, between a change in the relative length of the connection nozzle over time and a change in the relative length of the cable duct over time; and/or
- wherein the second terminal partial segment of the nozzle wall is at least partially formed by a thin disk, particularly a disk with a thickness that is substantially less than a diameter, particularly with a ratio of less than 1:5; and/or
- wherein the second terminal partial segment of the nozzle wall has an axial flexibility which enables a difference between changes in the length of the connection nozzle and/or of the cable duct of at least 0.1 mm in a non-destructive manner; and/or
- wherein the first terminal partial segment of the nozzle wall and the second terminal partial segment of the nozzle wall are designed to permit a difference between the variations in the length of the connection nozzle and of the cable duct of at least 0.1 mm in a non-destructive manner, particularly in that the first terminal partial segment of the nozzle wall and the second terminal partial segment of the nozzle wall have an axial flexibility overall that permits a difference between the variations in the length of the connection nozzle and of the cable duct of at least 0.1 mm in a non-destructive manner.

11. Connection device as claimed in one of the previous claims, wherein a central partial segment of the nozzle wall, particularly extended at a lateral distance from the cable duct and/or coaxially arranged in relation to the cable duct, forms a tube, particularly a hollow cylindrical tube.

12. Connection device as claimed in one of the previous claims, further comprising: a connection head (34) - particularly hollow cylindrical and/or in the form of a sleeve - connected to the connection nozzle, with a wall extending from a first end facing towards the connection nozzle and the cable duct to a second end at a distance from the connection nozzle and the cable duct - particularly a metal wall and/or a wall connected via a substance to substance connection with the nozzle wall, as well as an interior channel surrounded by said wall, said connection head being designed to be mechanically connected, particularly in a detachable manner, to an electronics housing.

13. Connection device as claimed in Claim 11 and 12, wherein the wall of the connection head is connected at the first end, particularly in a gas-tight manner and/or via a substance to substance connection, to the nozzle wall - particularly with an end of its central partial segment facing toward the connection head - particularly in such a way that the interior channel of the cable duct communicates with the interior channel of the connection head or enters into said interior channel.

14. Connection device as claimed in one of the Claims 12 to 13, wherein the connection head, the connection nozzle and the cable duct are arranged in such a way that the interior channel of the cable duct communicates with the interior channel of the connection head.

15. Connection device as claimed in one of the Claims 12 to 14, further comprising: a feedthrough, particularly made of glass, ceramic or a plastic material, said feedthrough serving to connect electrical connecting cables routed in the cable duct, wherein the feedthrough is positioned in the interior channel of the connection head and/or is surrounded by the wall of the connection head.

16. Connection device as claimed in one of the Claims 12 to 15, wherein the wall of the connection head has a male thread at least in the area of the second end, particularly a male thread that is designed to be screwed together with a complementary female thread of an electronics housing.

17. Connection device as claimed in one of the Claims 12 to 15, wherein the connection head comprises a connecting flange which is designed to be connected to a complementary connecting flange of an electronics housing, particularly in a detachable manner.

18. Transducer, comprising:
- a transducer housing (11) with a cavity (11*) surrounded by a wall (11a), particularly a metal wall;
- a sensor element positioned at least partially inside said cavity (11*) which is designed to measure a measured variable of a medium, particularly a fluid medium, and to generate at least a measuring signal representing said measured variable;
- as well as a connection device as claimed in one of the previous claims, wherein the connection device is fixed on the transducer housing, and is particularly connected to the wall of said housing via a substance to substance connection.

19. Transducer as claimed in the previous claim,
- wherein the connection device is placed at least partially, particularly primarily, outside the cavity of the transducer housing surrounded by the wall; and/or
- wherein the transducer housing is designed to contain a gas in the cavity (11*) of the transducer housing, specifically nitrogen (N₂) and/or argon (Ar) and/or carbon dioxide (CO₂) or air, acting on the nozzle wall and the wall (11a), particularly with a gas pressure of 1 bar and/or having a specific thermal conductivity of less than 0.1 W/(m • K); and/or
- wherein the cavity (11*) of the transducer housing is filled with a gas or a gas mixture, particularly a shielding gas, particularly a gas having a specific thermal conductivity of less than 0.1 W/ (m • K), particularly in such a way that a gas pressure present in the cavity (11*) of the transducer housing at 25 °C (room temperature) is greater than 0.5 bar; and/or
- wherein a central partial segment of the nozzle wall - particularly extending at a lateral distance to the cable duct and/or arranged at a lateral distance in relation to the cable duct - forms a tube, particularly a hollow cylindrical tube, and wherein the nozzle wall is connected to the wall of the transducer housing (11) by an end of its central partial segment facing towards the transducer housing (11), particularly via a substance-to-substance connection, particularly welded or soldered.

20. Transducer as claimed in one of the Claims 19 to 20,
- further comprising: at least a tube (400) arranged at least partially in the cavity of the transducer housing, said tube being designed to guide a flowing fluid, particularly a flowing liquid, in an interior channel surrounded by a tube wall, particularly metal, particularly being made to vibrate while fluid flows through it; and/or
- further comprising: at least a vibration generator (102) positioned inside the cavity (11*) of the transducer housing and designed to excite the at least one tube to perform mechanical vibrations.

21. Field device, comprising: a transducer as claimed in one of the Claims 19 to 21, as well as a transmitter electronics unit, which is electrically connected - particularly by means of electrical connecting cables routed in the cable duct - to said transducer, particularly to a sensor element of the transducer positioned at least partially in the cavity (11*) of the transducer housing (11) and/or to a vibration generator of the transducer positioned in the cavity (11*) of the transducer housing (11).

22. Field device as claimed in the previous claim, further comprising: an electronics housing (21), particularly a protection housing for the transmitter electronics (2),
- wherein the transmitter electronics - particularly electrically connected to the transducer, particularly by means of connection cables routed in a cable duct - are positioned in the electronics housing (21);
- and wherein the electronics housing (21) is mechanically connected to the connection device (3) particularly in a detachable manner.

## Revendications

1. Dispositif de raccordement pour la liaison mécanique d'un boîtier électronique, notamment un boîtier de protection pour une électronique, notamment une électronique de transmetteur, et d'un boîtier de transducteur, notamment un boîtier de protection pour au moins un élément capteur physique à électrique, lequel dispositif de raccordement comprend :
- un piquage de raccordement (31), notamment tubulaire et/ou formé au moyen d'un tube métallique, avec un canal intérieur entouré par une paroi de piquage (311), notamment métallique et/ou au moins partiellement cylindrique creuse ;
- ainsi qu'un conduit de câbles (32) tubulaire, formé notamment au moyen d'un tube métallique ou d'un tuyau métallique, avec un canal intérieur (32*) destiné à guider les câbles de raccordement électriques, lequel canal intérieur est entouré par une paroi de conduit (32a) et s'étend d'une première extrémité de conduit (32+) à une deuxième extrémité de conduit (32#) éloignée de celle-ci ;
- la paroi du piquage ou le piquage de raccordement formé avec celle-ci présentant une première ouverture (31+) et une deuxième ouverture (31#) éloignée de celle-ci ;
- le conduit de câbles et le piquage de raccordement étant disposés de telle sorte
-- que le conduit de câbles est positionné partiellement dans le canal intérieur du piquage de raccordement et est logé partiellement à la fois par la première ouverture dans la paroi du piquage de raccordement et par la deuxième ouverture dans la paroi du piquage de raccordement,
-- et qu'une cavité (33), notamment une cavité unique et/ou une cavité formée comme un espace annulaire, est formée entre une surface intérieure (311') de la paroi de piquage tournée vers le canal intérieur et une surface extérieure (321") de la paroi de conduit tournée vers le canal intérieur ;
- et le conduit de câbles et le piquage de raccordement étant reliés l'un à l'autre, notamment par une liaison de matière ou une liaison adhésive, de manière à ce que la cavité (33) soit fermée de manière étanche au gaz, notamment au moins de manière étanche à l'air, notamment de telle sorte que la cavité soit hermétiquement scellée par rapport à une atmosphère entourant le piquage de raccordement ou le dispositif de raccordement.

2. Dispositif de raccordement selon l'une des revendications précédentes, pour lequel le piquage de raccordement et le conduit de câbles sont conçus pour contenir dans la cavité (33) un gaz, notamment de l'azote (N₂), de l'argon (Ar), du dioxyde de carbone (C0₂), agissant sur la paroi du piquage et du conduit, notamment avec une pression de gaz de 1 bar.

3. Dispositif de raccordement selon l'une des revendications 1 à 2, pour lequel la cavité (33) contient un fluide, notamment de l'azote (N₂), de l'argon (Ar), du dioxyde de carbone (C0₂), qui présente une conductivité thermique spécifique inférieure à 0,1 W / (m • K), et/ou est un fluide gazeux.

4. Dispositif de raccordement selon la revendication précédente, pour lequel la cavité (33) est remplie d'un gaz ou d'un mélange de gaz présentant une conductivité thermique spécifique inférieure à 0,1 W / (m • K), notamment un gaz noble et/ou un gaz protecteur, notamment de telle manière qu'une pression de gaz régnant dans la cavité (33) est inférieure à 300 mbar ou supérieure à 0,5 bar à 25 °C.

5. Dispositif de raccordement selon l'une des revendications 1 à 2, pour lequel la cavité (33) est vidée / exempte de gaz au moins dans une mesure telle qu'une pression de gaz y régnant est inférieure à 300 mbar, notamment inférieure à 1 mbar à 25 °C, notamment telle que la pression de gaz à 25 °C (température ambiante) est inférieure à 10⁻³ mbar, notamment inférieure à 10⁻⁴ mbar.

6. Dispositif de raccordement selon l'une des revendications précédentes,
- pour lequel le conduit de câbles est conçu pour résister à une pression statique de plus de 100 bar sans destruction ; et/ou
- pour lequel la paroi du conduit de câbles présente une pression d'éclatement de plus de 300 bar ; et/ou
- pour lequel est formée, au moyen du conduit de câbles, une enveloppe antidéflagrante pour les câbles de raccordement qui y sont acheminés, notamment une enveloppe répondant aux exigences de la norme IEC 60079-1:2007 ou qui est conçue selon le mode de protection « Enveloppe antidéflagrante (Ex-d) » et/ou qui présente une résistance à la pression supérieure à 100 bar ; et/ou
- pour lequel la paroi du piquage est en métal, notamment en acier inoxydable ; et/ou
- pour lequel la paroi du conduit est en métal, notamment en acier inoxydable ou en titane ; et/ou
- pour lequel le conduit de câbles est formé au moyen d'un tuyau métallique, notamment au moyen d'un tuyau ondulé ; et/ou
- pour lequel la paroi du piquage présente une pression d'éclatement de plus de 300 bar ; et/ou
- pour lequel le piquage de raccordement comporte des ailettes de refroidissement sur une surface extérieure (311") de la paroi de piquage éloignée du canal intérieur, notamment des ailettes de refroidissement faisant partie intégrante de la paroi du piquage ; et/ou
- pour lequel la paroi du piquage présente une épaisseur, notamment minimale, qui est supérieure à 1 mm, notamment supérieure à 2 mm ; et/ou
- pour lequel la paroi du conduit présente une épaisseur, notamment minimale, qui est supérieure à 0,5 mm, notamment supérieure à 1 mm ; et/ou
- pour lequel la paroi du conduit présente une épaisseur, notamment minimale, qui est supérieure à l'épaisseur, notamment minimale, de la paroi du piquage ; et/ou
- pour lequel le conduit de câbles (32) et le piquage de raccordement (31) sont de longueur identique ; et/ou
- pour lequel le conduit de câbles (32) et le piquage de raccordement (31) sont disposés de manière coaxiale l'un par rapport à l'autre ; et/ou
- pour lequel le piquage de raccordement présente une longueur, qui est supérieure à 50 mm, et/ou qui est pour l'essentiel supérieure, notamment dans un rapport de plus de 2:1, à un diamètre extérieur du piquage de raccordement, ; et/ou
- pour lequel le piquage de raccordement présente un diamètre extérieur, qui est supérieur à 20 mm ;
- pour lequel le conduit de câbles présente une longueur, qui est supérieure à 50 mm et/ou qui est pour l'essentiel supérieure, notamment dans un rapport de plus de 2:1, à un diamètre extérieur du conduit de câbles ; et/ou
- pour lequel le conduit de câbles présente un diamètre extérieur, qui est inférieur à 10 mm et/ou qui est pour l'essentiel inférieur, notamment dans un rapport de moins de à 1:2, à un diamètre extérieur du piquage de raccordement.

7. Dispositif de raccordement selon l'une des revendications précédentes, pour lequel la paroi du piquage présente un premier segment partiel terminal qui renferme la première ouverture, notamment un segment en forme de membrane et/ou flexible axialement dans la direction d'un axe longitudinal imaginaire du conduit de câbles.

8. Dispositif de raccordement selon la revendication précédente,
- pour lequel le premier segment partiel terminal de la paroi du piquage est conçu pour réagir avec une déformation réversible à une différence - résultant notamment d'une différence de température variant dans le temps entre la paroi du piquage et la paroi du conduit - entre un changement de longueur relative variant dans le temps du piquage de raccordement et un changement de longueur relative variant dans le temps du conduit de câbles ; et/ou
- pour lequel le premier segment partiel terminal de la paroi du piquage est formé au moins partiellement au moyen d'un disque mince, notamment un disque ayant une épaisseur qui est sensiblement inférieure à un diamètre, notamment selon un rapport inférieur à 1:5 ; et/ou
- pour lequel le premier segment partiel terminal de la paroi du piquage présente une résilience axiale qui permet une différence entre les changements de longueur du piquage de raccordement et/ou du conduit de câbles d'au moins 0,1 mm de manière non destructive.

9. Dispositif de raccordement selon la revendication 7 ou 8, pour lequel la paroi du piquage présente un deuxième segment partiel terminal qui renferme la deuxième ouverture, notamment un segment partiel en forme de membrane et/ou axialement flexible dans la direction d'un axe longitudinal imaginaire du conduit de câbles.

10. Dispositif de raccordement selon la revendication précédente,
- pour lequel le deuxième segment partiel terminal de la paroi du piquage est conçu pour réagir avec une déformation réversible à une différence - résultant notamment d'une différence de température variant dans le temps entre la paroi du piquage et la paroi du conduit - entre un changement de longueur relative variant dans le temps du piquage de raccordement et un changement de longueur relative variant dans le temps du conduit de câbles ; et/ou
- pour lequel le deuxième segment partiel terminal de la paroi du piquage est formé au moins partiellement au moyen d'un disque mince, notamment un disque ayant une épaisseur qui est sensiblement inférieure à un diamètre, notamment selon un rapport inférieur à 1:5 ; et/ou
- pour lequel le deuxième segment partiel terminal de la paroi du piquage présente une résilience axiale qui permet une différence entre les changements de longueur du piquage de raccordement et/ou du conduit de câbles d'au moins 0,1 mm de manière non destructive ; et/ou
- pour lequel le premier segment partiel terminal du piquage et le deuxième segment partiel terminal de la paroi du piquage sont conçus pour permettre une différence entre les variations de longueur du piquage de raccordement et du conduit de câbles d'au moins 0,1 mm de manière non destructive, notamment en ce que le premier segment partiel terminal de la paroi du piquage et le deuxième segment partiel terminal de la paroi du piquage présentent une flexibilité axiale globale qui permet une différence entre les variations de longueur du piquage de raccordement et du conduit de câbles d'au moins 0,1 mm de manière non destructive.

11. Dispositif de raccordement selon l'une des revendications précédentes, pour lequel un segment partiel central de la paroi du piquage de raccordement - s'étendant notamment à une distance latérale du conduit de câbles et/ou disposé coaxialement au conduit de câbles - forme un tube, notamment un tube cylindrique creux.

12. Dispositif de raccordement selon l'une des revendications précédentes, comprenant en outre : une tête de raccordement (34) - notamment cylindrique creuse et/ou en forme de douille - reliée au piquage de raccordement, avec une paroi s'étendant d'une première extrémité tournée vers le piquage de raccordement et le conduit de câbles à une deuxième extrémité éloignée du piquage de raccordement et du conduit de câbles - notamment une paroi métallique et/ou une paroi reliée par liaison de matière à la paroi du piquage de raccordement, ainsi qu'un canal intérieur entouré par ladite paroi, laquelle tête de raccordement est conçue pour être reliée mécaniquement, notamment de manière amovible, à un boîtier électronique.

13. Dispositif de raccordement selon la revendication 11 et 12, pour lequel la paroi de la tête de raccordement est reliée à la première extrémité, notamment de manière étanche au gaz et/ou par liaison de matière, à la paroi du piquage de raccordement - notamment avec une extrémité de son segment partiel central tournée vers la tête de raccordement - notamment de telle manière que le canal intérieur du conduit de câbles communique avec le canal intérieur de la tête de raccordement ou débouche dans ledit canal intérieur.

14. Dispositif de raccordement selon l'une des revendications 12 à 13, pour lequel la tête de raccordement, le piquage de raccordement et le conduit de câbles sont disposés de telle sorte que le canal intérieur du conduit de câbles communique avec le canal intérieur de la tête de raccordement.

15. Dispositif de raccordement selon l'une des revendications 12 à 14, comprenant en outre : une traversée, notamment en verre, en céramique ou en matière plastique, laquelle traversée sert à raccorder des câbles de raccordement électriques posés dans le conduit de câbles, la traversée étant placée dans le canal intérieur de la tête de raccordement et/ou étant entourée par la paroi de la tête de raccordement.

16. Dispositif de raccordement selon l'une des revendications 12 à 15, pour lequel la paroi de la tête de raccordement présente un filetage extérieur au moins dans la zone de la deuxième extrémité, notamment un filetage extérieur qui est conçu pour être vissé sur un filetage intérieur complémentaire d'un boîtier électronique.

17. Dispositif de raccordement selon l'une des revendications 12 à 15, pour lequel la tête de raccordement comprend une bride de liaison qui est conçue pour être reliée, notamment de manière amovible, à une bride de liaison complémentaire d'un boîtier électronique.

18. Transducteur, comprenant :
- un boîtier de transducteur (11) avec une cavité (11 *) entourée par une paroi (11a), notamment métallique ;
- un élément capteur positionné au moins partiellement à l'intérieur de ladite cavité (11*) et qui est conçu pour mesurer une grandeur d'un produit, notamment un fluide, et pour générer au moins un signal de mesure représentant ladite grandeur mesurée ;
- ainsi qu'un dispositif de raccordement selon l'une des revendications précédentes, le dispositif de raccordement étant fixé au boîtier de transducteur, notamment relié à la paroi du boîtier par une liaison de matière.

19. Transducteur selon la revendication précédente,
- pour lequel le dispositif de raccordement est placé au moins partiellement, notamment de manière prédominante, à l'extérieur de la cavité du boîtier de transducteur entourée par la paroi ; et/ou
- pour lequel le boîtier de transducteur est conçu pour contenir dans la cavité (11*) du boîtier de transducteur un gaz, notamment de l'azote (N₂) et/ou de l'argon (Ar) et/ou du dioxyde de carbone (C0₂) ou de l'air, agissant sur la paroi de piquage et la paroi (11a), notamment avec une pression de gaz de 1 bar et/ou ayant une conductivité thermique spécifique inférieure à 0,1 W/(m • K) ; et/ou
- pour lequel a cavité (11*) du boîtier de transducteur est remplie d'un gaz ou d'un mélange de gaz, notamment d'un gaz protecteur, notamment d'un gaz présentant une conductivité thermique spécifique inférieure à 0,1 W/ (m • K), notamment de telle manière qu'une pression de gaz régnant dans la cavité (11*) du boîtier de transducteur à 25 °C (température ambiante) soit supérieure à 0,5 bar; et/ou
- pour lequel un segment partiel central de la paroi de piquage - notamment s'étendant à une distance latérale du conduit de câbles et/ou disposé à une distance latérale du conduit de câble - forme un tube, notamment un tube cylindrique creux, et pour lequel la paroi de piquage est reliée, notamment soudée ou brasée, à la paroi du boîtier de transducteur (11) par une extrémité de son segment partiel central tournée vers le boîtier de transducteur (11), notamment par liaison de matière.

20. Transducteur selon l'une des revendications 19 à 20,
- comprenant en outre : au moins un tube (400) disposé au moins partiellement dans la cavité du boîtier de transducteur, lequel tube est conçu pour guider un fluide en écoulement, notamment un liquide en écoulement, dans un canal intérieur entouré par une paroi de tube, notamment métallique, notamment pour être amené à vibrer pendant que le fluide s'écoule à travers lui; et/ou
- comprenant en outre : au moins un excitateur de vibrations (102) placé dans la cavité (11*) du boîtier de transducteur et conçu pour exciter l'au moins un tube en vibrations mécaniques.

21. Appareil de terrain, comprenant : un transducteur selon l'une des revendications 19 à 21, ainsi qu'une électronique de transmetteur, qui est reliée électriquement, notamment au moyen de câbles de raccordement électriques posés dans le conduit de câbles, audit transducteur - notamment à un élément capteur du transducteur placé au moins partiellement dans la cavité (11*) du boîtier de transducteur (11) et/ou à un excitateur de vibrations du transducteur placé dans la cavité (11*) du boîtier de transducteur (11).

22. Appareil de terrain selon la revendication précédente, comprenant en outre : un boîtier électronique (21), notamment un boîtier de protection pour l'électronique de transmetteur (2),
- l'électronique de transmetteur - laquelle est reliée électriquement avec le transducteur, notamment au moyen de câbles de liaison posés dans un conduit de câbles - étant placée dans le boîtier électronique (21) ;
- et le boîtier électronique (21) étant relié mécaniquement, notamment de manière amovible, avec le dispositif de raccordement (3).
